(19) Europäisches Patentamt
European Patent Office
Office européen des brevets

(11) **EP 4 582 269 B1**

(12) **EUROPEAN PATENT SPECIFICATION**

(45) Date of publication and mention
of the grant of the patent:
**29.04.2026 Bulletin 2026/18**

(21) Application number: **23941844.5**

(22) Date of filing: **24.11.2023**

(51) International Patent Classification (IPC):
**B60C 23/06** *(2006.01)*

(52) Cooperative Patent Classification (CPC):
**B60C 23/061; B60C 23/062**

(86) International application number:
**PCT/CN2023/133901**

(87) International publication number:
**WO 2025/107277 (30.05.2025 Gazette 2025/22)**

(54) **INDIRECT TIRE PRESSURE MONITORING METHOD AND SYSTEM SUITABLE FOR COMPLEX DRIVING WORKING CONDITIONS**

VERFAHREN UND SYSTEM ZUR INDIREKTEN REIFENDRUCKÜBERWACHUNG FÜR KOMPLEXE FAHRBETRIEBSBEDINGUNGEN

PROCÉDÉ ET SYSTÈME DE SURVEILLANCE INDIRECTE DE PRESSION DE PNEU APPROPRIÉS POUR DES CONDITIONS DE FONCTIONNEMENT DE CONDUITE COMPLEXES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.11.2023 CN 202311545295**

(43) Date of publication of application:
**09.07.2025 Bulletin 2025/28**

(73) Proprietor: **Ruolun Automobile Technology
(Wuhan) Co., Ltd
Wuhan, Hubei 430000 (CN)**

(72) Inventors:
• **ZHAO, Shanshi**
**Wuhan, Hubei 430000 (CN)**
• **GAO, Xin**
**Wuhan, Hubei 430000 (CN)**
• **ZONG, Peiliang**
**Wuhan, Hubei 430000 (CN)**
• **GUO, Jun**
**Wuhan, Hubei 430000 (CN)**

(74) Representative: **Chung, Hoi Kan
Mandarin IP Limited
7 Cherry Trees
Great Shelford
Cambridge CB22 5XA (GB)**

(56) References cited:
| | |
|---|---|
| CN-A- 101 973 192 | CN-A- 107 160 950 |
| CN-A- 110 053 431 | CN-A- 111 016 552 |
| CN-A- 112 339 508 | CN-A- 115 570 916 |
| JP-A- 2002 240 624 | KR-A- 20210 038 055 |
| US-A- 5 982 279 | US-A1- 2003 172 728 |
| US-A1- 2006 155 505 | US-A1- 2014 172 251 |
| US-A1- 2017 015 154 | US-A1- 2019 226 841 |
| US-A1- 2022 224 463 | US-B1- 6 385 553 |
| US-B2- 11 485 370 | US-B2- 7 240 542 |

**Description**

TECHNICAL FIELD

The present invention relates to the technical field of vehicle monitoring, and more specifically, to a method and system for monitoring indirectly a tire pressure applicable to a complex drive working condition.

BACKGROUND

At the present stage, a system for monitoring indirectly a tire pressure that relies on monitoring a tire speed is required to meet the requirements of the stability and reliability of the system on the premise of being able to realize an accurate underpressure alarm. U.S. Patents US2017015154A1, US6385553, and US5982279 all disclose methods for monitoring tire pressure. Among them, U.S. Patent US2017015154A1 discloses a method for monitoring indirectly a tire pressure applicable to a complex drive working condition, comprising: S1, obtaining an independent speed time stamp signal of each tire of a vehicle, and calculating a real-time rolling characteristic of each tire on the basis of the speed time stamp signal of the tire; wherein the real-time rolling characteristic comprises a vibration spectrum characteristic and a relative rolling radius characteristic; S2, obtaining a real-time monitoring signal of the vehicle, identifying a current working condition of the vehicle on the basis of a state position change of a particular signal value or a signal regular change of the monitoring signal of the entire vehicle, and analysing and disabling or compensating the real-time rolling characteristic on the basis of the current working condition to correct an abnormal change in a rolling characteristic of the tire caused due to the current working condition a tire pressure monitoring apparatus using a mass of a vehicle.

According to related regulations of the system for monitoring the tire pressure, a test road of the system for monitoring the tire pressure meets the requirements such as straight and smooth road surface, smooth driving of a vehicle during a test, and no change in a vehicle load. In an actual vehicle environment, it is bound to be unable to meet the requirements of an ideal environment described in regulations. Subject to a variety of complex vehicle environments and special drive working conditions, the system for monitoring indirectly the tire pressure has a relatively large risk of omission and false alarms. Therefore, the ability of the system to identify and deal with a special drive working condition has a greater impact on the upper limit of the performance of the system for monitoring indirectly the tire pressure.

Through a series of processing of a basic tire speed signal of the vehicle, basic rolling characteristics of a tire can be obtained, including a relative rolling radius characteristic $R_i$ between the tires and a vibration frequency spectrum characteristic $F_i$ during a rolling process of each tire. The above two major tire rolling characteristics have a greater correlation with a tire pressure. For example, when the relative rolling radius of a tire relative to other tires becomes smaller, and the tire vibration frequency spectrum characteristic significantly changes, it means the tire has had underpressure.

It is found in practice that a drive working condition and a drive behavior of a vehicle have a greater impact on the tire rolling characteristic. If the system for monitoring the tire pressure does not specially deal with some unconventional working conditions, the performance of the system for monitoring indirectly the tire pressure is seriously affected, resulting in frequent false alarms or omission alarm of the system for monitoring indirectly the tire pressure in the actual vehicle environment.

Therefore, it is necessary to study a system for monitoring a tire pressure associated with a real-time working condition of a vehicle to more accurately monitor the tire pressure.

SUMMARY

For the technical problems existing in the prior art, the present invention provides a method and system for monitoring indirectly a tire pressure applicable to a complex drive working condition, so as to solve the problems of different drive working conditions restricting the accuracy of monitoring results of the tire pressure.

According to a first aspect of the present invention, there is provided a method for monitoring indirectly a tire pressure applicable to a complex drive working condition, including:

S1, obtaining an independent speed time stamp signal of each tire of a vehicle, and calculating a real-time rolling characteristic of each tire on the basis of the speed time stamp signal of the tire;wherein the real-time rolling characteristic comprises a vibration spectrum characteristic $F_i$ and a relative rolling radius characteristic $R_i$;

S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition;

step S2 includes: obtaining a real-time brake flag position signal from the monitoring signal of the entire vehicle, obtaining, according to the state position change of the brake flag position signal, a moment $t_0$ when brake is generated and a moment $t_1$ when the brake is lifted; obtaining rolling angular-speed change values $\Delta\omega_{FL}$, $\Delta\omega_{FR}$, $\Delta\omega_{RL}$, and $\Delta\omega_{RR}$ corresponding to each tire from the speed time stamp signal of each tyre, obtaining a moment $t_2$ when a rolling angular-speed of the tire is zero, and calculating a brake degree B of the vehicle by the following equation:

$$\Delta t = \begin{cases} t_2 - t_0, t_2 < t_1 \\ t_1 - t_0, t_1 < t_2 \end{cases} \tag{1},$$

$$\omega = 1/4(\Delta\omega_{FL} + \Delta\omega_{FR} + \Delta\omega_{RL} + \Delta\omega_{RR}) \tag{2},$$

$$B = \omega/\Delta t \tag{3},$$

where $\Delta t$ is actual brake time, and $\omega$ is a change value of the rolling angular-speed of the tire.

comparing the calculated brake degree B with a preset brake identification parameter $B_0$ of the vehicle, and setting the brake identification parameter $B_0$ of the vehicle on the basis of the actual calibration results of the vehicle:

if $B \leq B_0$, determining that the current working condition of the vehicle is in an ordinary brake and requiring no correction of the rolling characteristic of the tire;

if $B > B_0$, determining that the current working condition of the vehicle is in an emergency brake, and analyzing and disabling the relative rolling radius characteristic Ri of the tire to stop the calculation of the relative rolling radius characteristics Ri from being updated until the emergency brake is determined to be lifted;S3, on the basis of the correspondence between the rolling characteristic and the tire pressure of the tire, calculating the tire pressure on the basis of the corrected rolling characteristic of the tire.

On the basis of the above technical solution, the present invention can also be improved as follows.

.

According to a second aspect of the present invention, there is provided a method for monitoring indirectly a tire pressure applicable to a complex drive working condition, including:

S1, obtaining an independent speed time stamp signal of each tire of a vehicle, and calculating a real-time rolling characteristic of each tire on the basis of the speed time stamp signal of the tire; wherein the real-time rolling characteristic comprises a vibration spectrum characteristic Fi and a relative rolling radius characteristic Ri;

S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition;

obtaining a real-time lateral acceleration L and a yaw rate Y on the basis of the monitoring signal of the entire vehicle, and calculating a discrete degree D(L) of a lateral acceleration and a discrete degree D(Y) of the yaw rate during k sampling periods, respectively:

$$D(L) = \sum_{i=1}^{k} 1/k \, (Li - l)^2 \tag{4},$$

$$D(Y) = \sum_{j=1}^{k} 1/k \, (Yj - y)^2 \tag{5},$$

where Li is a lateral acceleration data collected in an i-th cycle, $i \in [1,k]$. Yj is a yaw rate data collected in the i-th cycle, $j \in [1,k]$, and k is a natural number;

calculating a real-time turning working condition weighted value W(h) on the basis of the discrete degree D(L) of the lateral acceleration and the discrete degree D(Y) of the yaw rate:

$$W(h) = \sqrt[m+n]{D(Y)^n D(L)^m} \tag{6},$$

where m and n are weighted parameters, which are set according to model parameters and a real-time turning characteristic of the vehicle;
comparing the turning working condition weighted value W(h) with a weighted threshold $W_0$, determining whether the working condition is currently the turning working condition:

if W(h) < $W_0$, determining that the working condition is not currently the turning working condition and requiring no correction of the rolling characteristic of the tire;
if W(h) > $2W_0$, determining that the working condition is currently turning and loading composite conditions, and analyzing and disabling the relative rolling radius characteristic Ri of the tire and the vibration frequency spectrum characteristic Fi to stop the calculation of the real-time rolling characteristic of the tire from being updated until the current working condition is determined to be ended;
if $W_0 \leq$ W(h)$\leq 2W_0$, determining that the working condition is currently the turning working condition, and calculating real-time yaw rate information Y(t) by the following equation (7):

$$Y(t)= \pm[(R_{FL}+R_{RL})/2 - (R_{FR}+R_{RR})/2]/A \qquad (7),$$

where A is a tire spacing parameter of the vehicle. $R_{FL}$, $R_{RL}$, $R_{FR}$ and $R_{RR}$ are relative rolling radius values of the tires of the vehicle, respectively;
calculating a speed difference $\Delta R$ between the tires on both sides of the vehicle by the following equation (8):

$$\Delta R= \pm AY(t) \qquad (8),$$

where the positive or negative number of $\Delta R$ is related to a turning direction;
compensating the speed difference $\Delta R$ between the tires on the both sides of the vehicle into the relative rolling radius characteristic Ri of the tire on the side of the vehicle with an abnormally decreasing rolling radius.

S3, on the basis of the correspondence between the rolling characteristic and the tire pressure of the tire, calculating the tire pressure on the basis of the corrected rolling characteristic of the tire.

Optionally, step S2 includes:

selecting two frequencies having the highest degree of impact on road surface excitation, extracting frequency spectrum eigenvalues corresponding to the two frequencies from the vibration frequency spectrum characteristic Fi of each tire of the vehicle, respectively, and obtaining a first frequency spectrum eigenvalue and a second frequency spectrum eigenvalue;
according to changes in the amplitude of the first frequency spectrum eigenvalue and the amplitude of the second frequency spectrum eigenvalue over time, combining with a change in the relative rolling radius characteristic Ri of the tire over time to determine whether each tire is currently in a non-identically proportional underpressure state or an identically proportional underpressure state:

if it is determined that the tire is in the non-identically proportional underpressure state or the identically proportional underpressure state, stopping rough road surface identification;
if it is determined that the tire is not in the non-identically proportional underpressure state or the identically proportional underpressure state, averaging the first frequency spectrum eigenvalue and the second frequency spectrum eigenvalue to obtain a first frequency vibration characteristic compensation value Power1 and a second frequency vibration characteristic compensation value Power2 that reflect the roughness of a road surface, and compensating the first frequency vibration characteristic compensation value Power1 and the second frequency vibration characteristic compensation value Power2 into the vibration frequency spectrum characteristic Fi of each of the tires of the vehicle.

Optionally, according to the changes in the amplitude of the first frequency spectrum eigenvalue and the amplitude of the second frequency spectrum eigenvalue over time, combining with the change in the relative rolling radius characteristic Ri of the tire over time to determine whether each tire is currently in the non-identically proportional underpressure state or the identically proportional underpressure state includes:

if the magnitude of the first frequency spectrum eigenvalue, the magnitude of the second frequency spectrum eigenvalue, and the relative rolling radius characteristic Ri of the tire change synchronously over time, determining that the four tires are currently in the non-identically proportional underpressure state;

if the relative rolling radius characteristic Ri of the tire changes less in a certain time period, and the magnitude of the first frequency spectrum eigenvalue and the magnitude of the second frequency spectrum eigenvalue change in a consistent pattern over time, determining that the four tires are in the identically proportional underpressure state.

Optionally, step S2 includes:

obtaining a time domain-based longitudinal acceleration signal Xt according to the monitoring signal of the entire vehicle, and obtaining a smooth and plausible longitudinal acceleration filtered confidence value St after filtering through equation (9):

$$S_t = \alpha Xt + (1-\alpha)S_{t-1} \qquad (9),$$

where $\alpha$ is a filtered parameter, and $S_{t-1}$ is a longitudinal acceleration filtered confidence value at a previous moment; obtaining a speed of a driven tire of the vehicle on the basis of the speed times tamp signal of the tire, and obtaining an actual acceleration Area of the vehicle on the basis of a change rate of the speed of the driven tire of the vehicle per unit time;

calculating an average value Vi of the speeds of the two driven tires and an average value Vo of speeds of two driving tires on the basis of speed time stamp signals of the four tires, and calculating a driving slip rate H on the basis of the average value Vi of the speeds of the two driven tires and the average value Vo of the speeds of the two driving tires:

$$H = \frac{Vi - V0}{Vi} \times 100\% \qquad (10);$$

determining whether the vehicle is currently in an uphill or downhill condition on the basis of the longitudinal acceleration filtered confidence value St, the actual acceleration Area of the vehicle, and the driving slip rate H:

if St > H/$H_0$ Area, determining that the vehicle is in the uphill or downhill working condition; where $H_0$ is a slip rate threshold;

if H < $H_0$ when the vehicle is in the uphill or downhill working condition, requiring no correction of the rolling characteristic of the tire.

Optionally, step S2 includes:

obtaining a time domain-based torque fluctuation signal T(h) on the basis of the monitoring signal of the entire vehicle, and calculating a dynamic driving degree $T_{va}$ of the vehicle by combining a torque value T at a uniform speed:

$$T_{va} = T(h)/T \qquad (11),$$

determining whether the vehicle is in a dynamic drive working condition according to the dynamic driving degree $T_{va}$ and a driving slip rate H:

if H ≥ $H_0$ and $T_{va}$ > $T_C$, determining that the vehicle is in the dynamic drive working condition, where $T_C$ is a dynamic drive threshold, and the value of $T_C$ is set empirically;

for the dynamic drive working condition, calculating a gain by the following equation (12) for a relative rolling radius of the driving tire:

$$R = R_{driving} * f(H) \qquad (12),$$

where, f(H) is a gain function related to a current driving slip rate; $R_{driving}$ is the relative rolling radius of the driving tire; R is the relative rolling radius of the driving tire after the calculation of the gain;

updating the relative rolling radius R of the gained driving tire to the relative rolling radius characteristic Ri.

Optionally, step S2 further includes:

if it is determined that there is currently a loading change on the basis of the longitudinal acceleration filtered confidence value St, and if it is determined that the vehicle is not currently in a brake working condition, the uphill or downhill working condition, or the dynamic drive working condition, determining that the vehicle is currently in a loading working condition;

obtaining a longitudinal acceleration change $S_{T\,load}$ corresponding to different loads M of the vehicle recorded during an actual calibration stage of the vehicle, a longitudinal acceleration change $S_{T\,unloaded}$ when there is no load, and a relative rolling radius change $\Delta R_{load}$ of a coaxial tire, and providing the following relational equation when the load M is in the range of a load of the entire vehicle:

$$\Delta R_{load}=p(S_{T\,load}-S_{T\,unloaded}) \tag{13},$$

where p is a proportional factor;

substituting the longitudinal acceleration change $S_{T\,load}$ corresponding to the current load of the vehicle into equation (13) to calculate the relative rolling radius change $\Delta R_{load}$ of the coaxial tire corresponding to the current load;

compensating the calculated relative rolling radius change $\Delta R_{load}$ of the coaxial tire into the relative rolling radius characteristic Ri of the tire that changes abnormally due to the loading working condition.

According to a third aspect of the present invention, there is provided an system for monitoring indirectly a tire pressure applicable to a complex drive working condition, including:

a decomposing module, configured to obtain an independent speed time tamp signal of each tire of a vehicle, and calculate a real-time rolling characteristic of each tire on the basis of the speed time stamp signal of the tire;the real-time rolling characteristic comprises a vibration spectrum characteristic Fi and a relative rolling radius characteristic Ri;

a correcting module, configured to obtain a real-time monitoring signal of the vehicle, identify the current working condition of the vehicle on the basis of a state position change of a particular signal value or a signal regular change of the monitoring signal of the vehicle, and analyze and disable or compensate the real-time rolling characteristic on the basis of the current working conditions to correct an abnormal change in the rolling characteristic of the tire caused due to the current working condition; the correcting module specifically comprising:

obtaining a real-time brake flag position signal from the monitoring signal of the entire vehicle, obtaining, according to the state position change of the brake flag position signal, a moment $t_0$ when brake is generated and a moment $t_1$ when the brake is lifted; obtaining rolling angular-speed change values $\Delta\omega_{FL}$, $\Delta\omega_{FR}$, $\Delta\omega_{RL}$, and $\Delta\omega_{RR}$ corresponding to each of the tires from the speed time stamp signal of each of the tires, obtaining a moment $t_2$ when a rolling angular-speed of the tire is zero, and calculating a brake degree B of the vehicle by the following equation:

$$\Delta t = \begin{cases} t_2 - t_0, t_2 < t_1 \\ t_1 - t_0, t_1 < t_2 \end{cases} \tag{1}$$

$$\omega = 1/4(\Delta\omega_{FL} + \Delta\omega_{FR} + \Delta\omega_{RL} + \Delta\omega_{RR}) \tag{2},$$

$$B=\omega/\Delta t \tag{3},$$

wherein $\Delta t$ is actual brake time, and $\omega$ is a change value of the rolling angular-speed of the tire;

comparing the calculated brake degree B with a preset brake identification parameter $B_0$ of the vehicle, and setting the brake identification parameter $B_0$ of the vehicle on the basis of actual calibration results of the vehicle:

if $B \leq B_0$, determining that the current working condition of the vehicle is in an ordinary brake and requiring no correction of the rolling characteristic of the tire;

if $B > B_0$, determining that the current working condition of the vehicle is in an emergency brake, and analyzing and disabling the relative rolling radius characteristic Ri of the tire to stop the calculation of the relative rolling radius characteristics Ri from being updated until the emergency brake is determined to be lifted;and

a solving module, configured to, on the basis of the correspondence between the rolling characteristic and the tire pressure of the tire, calculate the tire pressure on the basis of the corrected rolling characteristic of the tire.

According to a fourth aspect of the present invention, there is provided an system for monitoring indirectly a tire pressure applicable to a complex drive working condition, including:

a decomposing module, configured to obtain an independent speed time tamp signal of each tire of a vehicle, and calculate a real-time rolling characteristic of each tire on the basis of the speed time stamp signal of the tire; wherein the real-time rolling characteristic comprises a vibration spectrum characteristic Fi and a relative rolling radius characteristic Ri;

a correcting module, configured to obtain a real-time monitoring signal of the vehicle, identify the current working condition of the vehicle on the basis of a state position change of a particular signal value or a signal regular change of the monitoring signal of the vehicle, and analyze and disable or compensate the real-time rolling characteristic on the basis of the current working conditions to correct an abnormal change in the rolling characteristic of the tire caused due to the current working condition;

the correcting module specifically comprising:

obtaining a real-time lateral acceleration L and a yaw rate Y on the basis of the monitoring signal of the entire vehicle, and calculating a discrete degree D(L) of a lateral acceleration and a discrete degree D(Y) of the yaw rate during k sampling periods, respectively:

$$D(L) = \sum_{i=1}^{k} 1/k \, (Li - l)^2 \qquad (4),$$

$$D(Y) = \sum_{j=1}^{k} 1/k \, (Yj - y)^2 \qquad (5),$$

wherein Li is a lateral acceleration data collected in an i-th cycle, $i \in [1,k]$; Yjis a yaw rate data collected in the i-th cycle, $j \in [1,k]$, and k is a natural number;

calculating a real-time turning working condition weighted value W(h) on the basis of the discrete degree D(L) of the lateral acceleration and the discrete degree D(Y) of the yaw rate:

$$W(h) = \sqrt[m+n]{D(Y)^n D(L)^m} \qquad (6),$$

wherein m and n are weighted parameters, which are set according to model parameters and a real-time turning characteristic of the vehicle;

comparing the turning working condition weighted value W(h) with a weighted threshold $W_0$, determining whether the working condition is currently the turning working condition:

if $W(h) < W_0$, determining that the working condition is not currently the turning working condition, requiring no correction of the rolling characteristic of the tire;

if $W(h) > 2W_0$, determining that the working condition is currently turning and loading composite conditions, and analyzing and disabling the relative rolling radius characteristic Ri of the tire and the vibration frequency spectrum characteristic Fi to stop the calculation of the real-time rolling characteristic of the tire from being updated until the current working condition is determined to be ended;

if $W_0 \le W(h) \le 2W_0$, determining that the working condition is currently the turning working condition, and calculating real-time yaw rate information Y(t) by the following equation (7):

$$Y(t) = \pm[(R_{FL} + R_{RL})/2 - (R_{FR} + R_{RR})/2]/A \qquad (7),$$

wherein A is a tire spacing parameter of the vehicle. $R_{FL}$, $R_{RL}$, $R_{FR}$ and $R_{RR}$ are relative rolling radius values of the tires of the vehicle, respectively;

calculating a speed difference $\Delta R$ between the tires on both sides of the vehicle by the following equation (8):

$$\Delta R = \pm A Y(t) \qquad (8),$$

wherein the positive or negative number of ∆R is related to a turning direction;
the speed difference ∆R between the tires on the both sides of the vehicle is compensated into the relative rolling radius characteristic Ri of the tire on a side of the vehicle with an abnormally decreasing rolling radius.

A solving module, configured to, on the basis of the correspondence between the rolling characteristic and the tire pressure of the tire, calculate the tire pressure on the basis of the corrected rolling characteristic of the tire.

According to a fifth aspect, there is provided an electronic apparatus, including a memory and a processor. The processor is configured to implement the steps of the above method for monitoring indirectly the tire pressure applicable to the complex drive working condition when executing a computer management type program stored in the memory.

According to a sixth aspect, there is provided a computer-readable storage medium, having a computer management type program stored thereon. The computer management type program, when executed by a processor, implements the steps of the above method for monitoring indirectly the tire pressure applicable to the complex drive working condition.

The present invention provides a method and system for monitoring indirectly a tire pressure applicable to a complex drive working condition, an electronic apparatus and a storage medium. The current operating state of a vehicle is identified on the basis of a real-time monitoring signal of the vehicle. A special working condition in an actual vehicle environment, especially for drive working conditions that may affect a rolling characteristic of a tire, such as brake, a mountain road (uphill or downhill and turning), a loading change working condition, a dynamic drive, a rough road surface, and the like, is focused on being identified and dealt with. According to different drive working conditions, the rolling characteristic of the tire is analyzed and disabled or compensated. An abnormal change in the rolling characteristic of the tire caused by a special drive working condition is corrected, so that changes in a relative rolling radius characteristic of the tire and a vibration spectral characteristic are only strongly correlated with a change in the tire pressure, which eliminates the connection between the rolling characteristic of the tire and an unconventional drive working condition, and improves the accuracy of monitoring indirectly the tire pressure in the actual vehicle environment.

BRIEF DESCRIPTION OF THE DRAWINGS

FIG. 1 is a flow chart of a method for monitoring indirectly a tire pressure applicable to a complex drive working condition provided by the present invention;
FIG. 2 is a block diagram of compositions of a system for monitoring indirectly a tire pressure applicable to a complex drive working condition provided by the present invention;
FIG. 3 is a schematic structural diagram of a hardware of a possible electronic apparatus provided by the present invention;
FIG. 4 is a schematic structural diagram of a hardware of a possible computer-readable storage medium provided by the present invention.

DETAILED DESCRIPTION OF THE EMBODIMENTS

A specific mode of the present invention is described in further detail below in connection with the accompanying drawings and embodiments. These embodiments are only intended to illustrate the present invention rather than to limit the scope thereof.

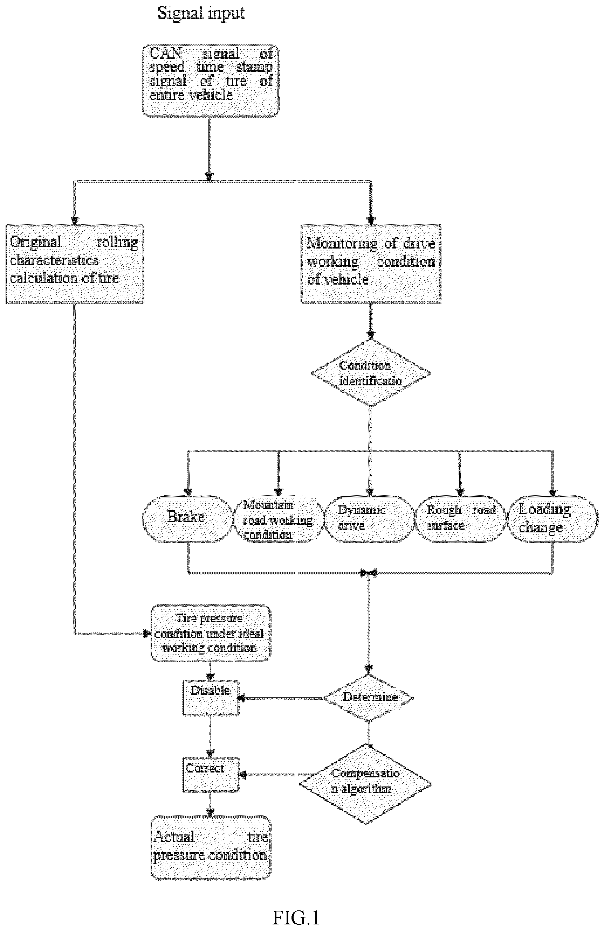

FIG. 1 is a flow chart of a method for monitoring indirectly a tire pressure applicable to a complex drive working condition provided by the present invention. As shown in FIG. 1, the method includes steps S1-S3:

S1, obtaining an independent speed time stamp signal of each tire of a vehicle, and calculating a real-time rolling characteristic of each tire on the basis of the speed time stamp signal of the tire;
S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition;
S3, on the basis of the correspondence between the rolling characteristic and the tire pressure of the tire, calculating the tire pressure on the basis of the corrected rolling characteristic of the tire.

It is to be understood that on the basis of the defects in the background, an embodiment of the present invention proposes a method for monitoring indirectly a tire pressure applicable to a complex drive working condition. For the present invention, the current operating state of the vehicle is identified on the basis of the real-time monitoring signal of the vehicle. A special working condition in an actual vehicle environment, especially for drive working conditions that may affect the rolling characteristic of the tire, such as brake, a mountain road (uphill or downhill and turning), a loading change working condition, a dynamic drive, a rough road surface, and the like, is focused on being identified and dealt with. According to different drive working conditions, the rolling characteristic of the tire is partially analyzed and disabled, wholly analyzed and disabled, or compensated. An abnormal change in the rolling characteristic of the tire caused by a special drive working condition is corrected, so that changes in a relative rolling radius characteristic of the tire and a vibration spectral characteristic are only strongly correlated with a change in the tire pressure, which eliminates the connection between the rolling characteristic of the tire and an unconventional drive working condition, and improves the accuracy of monitoring indirectly the tire pressure in the actual vehicle environment.

In this embodiment, in step S1, calculating the real-time rolling characteristic of each tire on the basis of the collected independent speed time stamp signal of each tire of the vehicle to obtain the real-time rolling characteristic of each tire. The real-time rolling characteristic includes a vibration frequency spectrum characteristic Fi and a relative rolling radius characteristic Ri (for example, the relative rolling radius characteristics $R_{FL}$, $R_{RL}$, $R_{FR}$ and $R_{RR}$, which are in one-to-one correspondence with the four tires and are to be mentioned shortly in a subsequent section).

It is understood that the rolling characteristic of the tire mentioned in the present invention includes independent vibration spectrum information of the four tires of the vehicle and a relative speed difference (i.e., a relative rolling radius) of a tire relative to the other three tires. Ideally, the rolling characteristic of a tire and the tire pressure can be expressed as (Pi, Ri, and Fi). Pi, Ri, and Fi have correlation. One of Pi, Ri, and Fi can be deduced by the value of the other two.

More specifically, Pi is a value of an actual tire pressure at a certain point in time under an ideal state, (because a temperature factor in a closed and independent system of the tire directly leads to the change in the tire pressure, this change can also reflect a change in the rolling characteristic of the tire).

Ri is a value of the relative rolling radius of the tire when the actual pressure of the tire is Pi so that the angular speed of rotation of the tire is approximated. A method for extracting a relative rolling radius characteristic Ri from a speed times tamp signal of a tire is prior art. The extraction method of the characteristic can be referred to the patent "ZL 2021 1 1004413.3".

Fi is a vibration frequency spectrum eigenvalue of the tire under the actual pressure of Pi. Fi reflects a change in a vibration characteristic caused by the deformation of the tire. A method for extracting a vibration frequency spectrum characteristic Fi of a tire from a speed times tamp signal of the tire is prior art. The extraction method of the characteristic can be referred to the patent "ZL 2019 1 0226001.0".

Ideally, the rolling characteristics of the above two tires can be configured to monitor the air pressure status of the tire. However, the problem is that the rolling characteristics of the two tires may be affected by the special drive working condition of the vehicle. Ideally, when the actual pressure Pi of a tire changes, especially when the actual pressure of the tire becomes small, the rolling radius value of this tire becomes smaller relative to other tires, which is reflected in the change in the relative rolling radius value Ri of this tire. Similarly, the vibration characteristic of this tire also changes when the vibration frequency spectrum characteristic Fi is normal relative to the pressure of the tire at a previous moment. Therefore, an objective of the present invention is to identify various working conditions that may affect the tire rolling characteristics during actual driving of the vehicle on the basis of an input signal of the vehicle, and to eliminate/correct the effects of these working conditions on the tire rolling characteristic of the tire through calculation, so as to monitor the pressure changes of the tire through the corrected rolling characteristic of the tire and obtain accurate monitoring results of the pressure of the tire.

It should be noted that the monitoring signal of the entire vehicle mainly refers to a signal inputted to the entire vehicle by the system, for example: 1. the independent tire speed time stamp signals of the four tires; 2. raw CAN signals of the entire vehicle: a torque signal output by an actual engine/a motor, a rotational speed signal of the actual engine/the motor, a brake flag position signal, and an acceleration sensor signal (transverse acceleration, longitudinal acceleration, and yaw rate signals). The above monitoring signals of the entire vehicle can be comprehensively calculated to obtain the real-time rolling characteristics of the tire under an ideal state.

The above monitoring signals of the entire vehicle can also be configured to monitor and identify the current operating state of the vehicle (the drive working condition). The system identifies the current operating state of the vehicle on the basis of a change in a state level of a particular input signal value or the combination of a plurality of signals that show a certain regular change. The system further determines after identifying the different working conditions, and corrects the abnormal change in the rolling characteristic of the tires caused by the special drive working conditions by partially disabling, comprehensively compensating, and so on, so as to be used for monitoring an change in the pressure of the tire.

In a possible embodiment method, step S2, identifying and processing a brake working condition includes:

obtaining a real-time brake flag position signal from the monitoring signal of the entire vehicle, obtaining, according to the state position change of the brake flag position signal, a moment $t_0$ when brake is generated and a moment $t_1$ when the brake is lifted; obtaining rolling angular-speed change values $\Delta\omega_{FL}$, $\Delta\omega_{FR}$, $\Delta\omega_{RL}$, and $\Delta\omega_{RR}$ in one-to-one correspondence to the four tires from the speed time stamp signal of the four tires, respectively, obtaining a moment $t_2$ when a rolling angular-speed of the tire is zero, and calculating a brake degree B of the vehicle by the following equation (1):

$$\Delta t = \begin{cases} t_2 - t_0, t_2 < t_1 \\ t_1 - t_0, t_1 < t_2 \end{cases} \tag{1},$$

$$\omega = 1/4(\Delta\omega_{FL} + \Delta\omega_{FR} + \Delta\omega_{RL} + \Delta\omega_{RR}) \tag{2},$$

$$B = \omega/\Delta t \tag{3},$$

where $\Delta t$ is actual brake time, and $\omega$ is a change value of the rolling angular-speed of the tire.

comparing a calculated brake degree B with a preset brake identification parameter $B_0$ of the vehicle, and setting the brake identification parameter $B_0$ of the vehicle on the basis of the actual calibration results of the vehicle. $B_0$ is related to the performance of the brake system and the mass of the vehicle:

if $B \leq B_0$, determining that the current working condition of the vehicle is in an ordinary brake and requiring no correction of the rolling characteristic of the tire;

if $B > B_0$, determining that the current working condition of the vehicle is in an emergency brake, and analyzing and disabling the relative rolling radius characteristic Ri of the tire to stop the calculation of the relative rolling radius characteristics Ri from being updated until the emergency brake is determined to be lifted because an emergency brake action significantly affects the tire rolling radius characteristic Ri, and an change of Ri has no clear correlation with a brake behavior and the size of a brake force.

It is understood that this embodiment determines the degree of impact of the current brake action. The brake action of the vehicle directly affects the speed of the individual tires and thus affects the analysis of the relative rolling radius characteristic Ri of the tire. This system identifies the type of brake according to the degree of brake while the vehicle moves (distinguishing an emergency brake from a regular brake), and differentiates between different types of brake. When the brake pedal of the vehicle is slightly pressed and a weak brake force is generated, the brake flag position of the entire vehicle responds and inputs a brake command to the system. When the brake occurs, a change rate of the angular speed of the tire is calculated. The degree of the brake is further calculated on the basis of the monitored individual time nodes. The tire rolling radius characteristic Ri is in turn correspondingly processed on the basis of the degree of the brake.

It is to be noted that analysis and disabling in the present invention means that when a condition triggering the analysis and disabling is identified at a certain moment, the calculation and updating of the rolling characteristic of the relevant tire is immediately stopped until the rolling characteristic of the relevant tire no longer triggers a disabling condition at a certain cycle thereafter. After the disabling condition is not satisfied, the analysis and calculation of the rolling characteristic of the tire continues on the basis of the current cycle of the input signal (the monitoring signal of the vehicle) of the vehicle.

In a possible embodiment method, in step S2, identifying and processing a mountain road condition (turning working condition) includes:

obtaining a real-time lateral acceleration L, a longitudinal acceleration X, and a yaw rate Y on the basis of an attitude acceleration sensor signal in the monitoring signal of the vehicle, where the lateral acceleration L and the yaw rate Y can be configured to identify the turning working condition in a mountain road working condition; the longitudinal acceleration X can be configured to identify the uphill or downhill condition in the mountain road working condition, and the system preferably collects sample points of the three signals at a sampling frequency of 100 ms, respectively.

Regarding the identification of the turning working condition, firstly, a discrete degree D(L) of the lateral acceleration and a discrete degree D(Y) of the yaw rate in k sampling periods are calculated, respectively:

$$D(L) = \sum_{i=1}^{k} 1/k \, (Li - l)^2 \tag{4},$$

$$D(Y) = \sum_{j=1}^{k} 1/k \, (Yj - y)^2 \tag{5},$$

where $L_i$ is a lateral acceleration data collected in an i-th cycle, $i \in [1,k]$. $Y_j$ is a yaw rate data collected in the i-th cycle, $j \in [1,k]$. $k$ is a natural number, and the value of $k$ is preferably 10.

The lateral acceleration D and the yaw rate Y are jointly configured to identify the turning working condition. The weighted value of the real-time turning working conditions W(h) is calculated by weighting physical characteristics of the discrete degree D(L) of the lateral acceleration and the discrete degree D(Y) of the yaw rate according to the physical characteristics:

$$W(h) = \sqrt[m+n]{D(Y)^n D(L)^m} \qquad (6),$$

where m and n are weighted parameters, which are set according to model parameters and a real-time turning characteristic of the vehicle;

W (h) is configured to determine whether the vehicle is in a turning state. It is taken into account comprehensively that a computing resource and a monitoring frequency are sufficient to identify all the turning working conditions. It is assumed that a W (h) value is a turning signal characteristic value of the vehicle for current 10s. The system carries out an operation once every 10s. The W value is constantly updated with a change in time h. W (h) is dynamically compared with a preset parameter $W_0$ over time to determine the turning working conditions of the vehicle. A specific operation is as follows:

The turning working condition weighted value W(h) is dynamically compared with a weighted threshold $W_0$ in a period of 1s. It is determined whether the working condition is currently the turning working condition:

If W(h) < $W_0$, it is determined that the working condition is not currently the turning working condition. No correction of the rolling characteristic of the tire is required.

If W(h) > $2W_0$, it is considered that a change in the tire relative rolling radius is not only caused due to the turning of the vehicle, but also may come from a change in a tire load caused by tire deformation. Therefore, it is determined that the working condition is currently turning and loading composite conditions. The relative rolling radius characteristic $R_i$ of the tire and the vibration frequency spectrum characteristic $F_i$ are analyzed and disabled to stop the calculation of the real-time rolling characteristic of the tire from being updated until the current working condition is determined to be ended.

If $W_0 \leq W(h) \leq 2W_0$, it is determined that the current working condition is in a turning working condition, in which case it is considered that a speed difference of the tire causing a change in the relative rolling radius of the tire is only caused by the turning. Real-time yaw rate information Y(t) is calculated by the following equation (7):

$$Y(t) = \pm[(R_{FL}+R_{RL})/2-(R_{FR}+R_{RR})/2]/A \qquad (7),$$

where A is a tire spacing parameter of the vehicle. $R_{FL}$, $R_{RL}$, $R_{FR}$ and $R_{RR}$ are relative rolling radius values of the tires of the vehicle, respectively. More specifically, $R_{FL}$ is a relative rolling radius value of a left front tire with respect to the remaining three tires. $R_{RL}$ is a relative rolling radius value of a left rear tire with respect to the remaining three tires. $R_{FR}$ is a relative rolling radius value of a right front tire with respect to the remaining three tires. $R_{RR}$ is a relative rolling radius value of a right rear tire with respect to the remaining three tires.

A speed difference $\Delta R$ between the tires on both sides of the vehicle is calculated by the following equation (8):

$$\Delta R = \pm AY(t) \qquad (8),$$

where the positive or negative number of $\Delta R$ is related to a turning direction;

The speed difference $\Delta R$ between the tires on the both sides of the vehicle is compensated into the relative rolling radius characteristic $R_i$ of the tire on the side of the vehicle with an abnormally decreasing rolling radius.

In a possible embodiment method, in step S2, identifying and processing a rough road surface working condition includes:

selecting two frequencies having the highest degree of impact on road surface excitation, extracting frequency spectrum eigenvalues corresponding to the two frequencies from the vibration frequency spectrum characteristic $F_i$ of each tire of the vehicle, respectively, and obtaining a first frequency spectrum eigenvalue and a second frequency spectrum eigenvalue;

according to changes in the amplitude of the first frequency spectrum eigenvalue and the amplitude of the second frequency spectrum eigenvalue over time, combining with a change in the relative rolling radius characteristic $R_i$ of the tire over time to determine whether each tire is currently in a non-identically proportional underpressure state or an identically proportional underpressure state:

if the magnitude of the first frequency spectrum eigenvalue, the magnitude of the second frequency spectrum eigenvalue, and the relative rolling radius characteristic Ri of the tire change synchronously over time, determining that the four tires are currently in the non-identically proportional underpressure state;

if the relative rolling radius characteristic Ri of the tire changes less in a certain time period, and the magnitude of the first frequency spectrum eigenvalue and the magnitude of the second frequency spectrum eigenvalue change in a consistent pattern over time, determining that the four tires are in the identically proportional underpressure state.

if it is determined that the tire is in the non-identically proportional underpressure state or the identically proportional underpressure state, stopping rough road surface identification;

if it is determined that the tire is not in the non-identically proportional underpressure state or the identically proportional underpressure state, averaging the first frequency spectrum eigenvalue and the second frequency spectrum eigenvalue to obtain a first frequency vibration characteristic compensation value Power1 and a second frequency vibration characteristic compensation value Power2 that reflect the roughness of a road surface, and compensating the first frequency vibration characteristic compensation value Power1 and the second frequency vibration characteristic compensation value Power2 into the vibration frequency spectrum characteristic Fi of each of the tires of the vehicle.

It is understood that a rolling vibration frequency spectrum spectrum of the tire is only affected by the tire pressure and road surface excitation under the premise that a vehicle suspension and a tire characteristic are determined. The road surface excitation of tire travel generally affects the spectrum of about 25 Hz and about 60 Hz. The higher the road surface roughness, the larger the spectral noise signature. Therefore, in this embodiment, a first frequency is selected to be 25Hz. A second frequency is selected to be 60Hz. In this embodiment, frequency spectrum characteristic values corresponding to frequencies of 25Hz and 60Hz of each tire are monitored. Generally, there are numerical and temporal differences in frequency spectrum characteristic amplitude changes corresponding to the frequencies of 25Hz and 60Hz of each tire due to roughness of a road surface. Here, when the rough road surface is determined on the basis of the frequency spectrum characteristic amplitude changes corresponding to the frequencies of 25Hz and 60Hz, two cases of the non-identically proportional underpressure state of the four tires and the identically proportional underpressure state of the four tires are excluded for the following reasons:

When the non-identically proportional underpressure state of the four tires occurs, the relative rolling radius characteristic of the tire correspondingly changes, and then changes in the frequency spectrum characteristic values corresponding to 25Hz and 60Hz may be caused by tire underpressure;

When the identically proportional underpressure state of the four tires occurs, the relative rolling radius characteristic of the tire does not change. However, if changes in frequency spectrum eigenvalues corresponding to 25Hz and 60Hz of the four tires in a certain same sampling period are the same, the changes are considered to be caused by the identically proportional underpressure state of the four tires.

When any one of the above two tire underpressure conditions is determined, the identification of the rough road working condition is stopped. After the above two tire underpressure conditions are excluded, the Power1 and Power2 values that reflect the current roughness of a road surface are calculated from the average of the frequency spectrum eigenvalues of the four tires corresponding to the frequencies of 25Hz and 60Hz, respectively. The calculated Power1 and Power2 values can be directly configured to compensate for an abnormal change in the vibration characteristic of the tire, i.e., the Power1 and Power2 values are added to the vibration frequency spectrum characteristic Fi of each tire.

The dynamic drive, a loading change, and an uphill or downhill mountain road identification process are all related to a longitudinal acceleration of the vehicle. A longitudinal acceleration signal of the vehicle monitors a change of the acceleration of the vehicle in a vertical direction and is configured to determine a change in a pitch angle of the vehicle. A change in a longitudinal acceleration signal value is mainly caused by a change in a driving slope, a superimposed acceleration and deceleration, and a change in loading of the vehicle. In combination with other operating characteristics of the vehicle and a change in the rolling characteristic of the tire, a dynamic drive working conditions, the loading change condition, and the uphill or downhill slope working condition of the vehicle can be distinguished from.

In a possible embodiment method, in step S2, identifying and processing the uphill or downhill working condition includes:

obtaining a time domain-based longitudinal acceleration signal Xt according to the monitoring signal of the entire vehicle, and obtaining a smooth and plausible longitudinal acceleration filtered confidence value St after filtering through equation (9):

$$S_t = \alpha X t + (1-\alpha) S_{t-1} \qquad\qquad (9),$$

where $\alpha$ is a filtered parameter, and $S_{t-1}$ is a longitudinal acceleration filtered confidence value at a previous moment;
According to the speed time stamp signal of the tire, the speed of the driven tire of the vehicle is obtained. For the driven tire, that is, a free rolling tire without a driving force, according to the physical radius of the tire, a rolling linear speed can be obtained. On the basis of a change rate of a speed of the driven tire of the vehicle in a unit time, an actual acceleration Area of the vehicle is obtained. A calculation frequency of the actual acceleration Area is consistent with an update frequency of the longitudinal acceleration signal Xt input from an attitude sensor of the vehicle.

Due to the existence of a torque at a tire end of a driving tire, the driving tire is bound to have dynamic friction with the road surface and generate relative slip, while a driven tire of a two-drive model does not have such relative slip. When the vehicle is in a normal drive state, an average value Vi of the speeds of the two driven tires and an average value Vo of speeds of the two driving tires are calculated on the basis of speed time stamp signals of the four tires. A driving slip rate H is calculated on the basis of the average value Vi of the speeds of the two driven tires and the average value Vo of the speeds of the two driving tires:

$$H = \frac{Vi-V0}{Vi} \times 100\% \tag{10};$$

determining whether the vehicle is currently in an uphill or downhill condition on the basis of the longitudinal acceleration filtered confidence value St, the actual acceleration Area of the vehicle, and the driving slip rate H:
If St > H/$H_0$ Area, it is determined that the vehicle is in the uphill or downhill working condition; where $H_0$ is a slip rate threshold.

When it is in the uphill or downhill working condition, the rolling characteristic of the tire does not need to be corrected if the slip rate H < $H_0$, as a simple change in a slope has a relatively small effect on the rolling characteristic of the tire.

In a possible embodiment method, in step S2, identifying and processing the dynamic drive working condition includes:
obtaining a time domain-based torque fluctuation signal T(h) on the basis of the monitoring signal of the entire vehicle, and calculating a dynamic driving degree $T_{va}$ of the vehicle by combining a torque value T at a uniform speed:

$$T_{va} = T(h)/T \tag{11},$$

In this embodiment, a calling frequency of a driving torque of the entire vehicle is 1s/time. The fluctuation of the torque within 10 sampling cycles (a total of 10s) is calculated and expressed as T (h). The discrete degree of the torque is dynamically determined over time. A ratio of the value of T (h) within each 10s to a value of T (a preset parameter) at the time of drive at a constant speed (here, the constant speed indicates that the fluctuation range of the speed is not more than 1%) is monitored at all times for determining a dynamic drive degree of the vehicle.

It is determined whether the vehicle is in a dynamic drive working condition according to the dynamic driving degree $T_{va}$ and the driving slip rate H:

If H $\geq$ $H_0$ occurs continuously within a preset calculation period (e.g., 10 calculation periods), and $T_{va}$ > $T_C$, it is determined that the vehicle is in the dynamic drive working condition, where $T_C$ is a dynamic drive threshold, and the value of $T_C$ is set empirically, for example, the value of $T_C$ is set preferably as 1.5.
for the dynamic drive working condition, a gain is calculated by the following equation (12) for a relative rolling radius of the driving tire:

$$R = R_{driving} * f(H) \tag{12},$$

where, f (H) is a gain function related to a current driving slip rate; $R_{driving}$ is the relative rolling radius of the driving tire; R is the relative rolling radius of the driving tire after the calculation of the gain.

Updating the relative rolling radius R of the gained driving tire to the relative rolling radius characteristic Ri.
It will be appreciated that dynamic drive behavior allows the drive tire to turn too fast. Correspondingly, the rolling radius is decreased relative to the actual radius. Therefore, appropriate corrections to this anomalous change need to be made.
In a possible embodiment method, step S2, identifying and processing the loading working condition includes:

determining that the vehicle is currently in the loading working condition, if it is determining that the vehicle is not currently in the brake working condition, the uphill or downhill working condition, or the dynamic drive working condition, and if it is determined that there is currently a loading change according to a longitudinal acceleration filtered confidence value St;

obtaining a longitudinal acceleration change $S_{T\,load}$ corresponding to different loads M of the vehicle recorded during an actual calibration stage of the vehicle, a longitudinal acceleration change $S_{T\,unloaded}$ when there is no load, and a relative rolling radius change $\Delta R_{load}$ of a coaxial tire, and providing the following relational equation when the load M is in the range of a load of the entire vehicle:

$$\Delta R_{load} = p(S_{T\,load} - S_{T\,unloaded}) \qquad\qquad (13),$$

where p is a proportional factor;

substituting the longitudinal acceleration change $S_{T\,load}$ corresponding to the current load of the vehicle into equation (13) to calculate the relative rolling radius change $\Delta R_{load}$ of the coaxial tire corresponding to the current load;

compensating the calculated relative rolling radius change $\Delta R_{load}$ of the coaxial tire into the relative rolling radius characteristic Ri of the tire that changes abnormally due to the loading working condition.

It will be appreciated that the vehicle carrying different loads cause different degrees of change in a static longitudinal acceleration of the vehicle, which originates from all elastic support structures of the entire vehicle. The loading causes a smaller tire radius and deformation of a suspension structure. The change in the longitudinal acceleration can be measured in real time by an attitude sensor. A change in a rolling radius of the tire can be calculated from the speed time stamp signals of the tire. An active suspension system can partially input suspension deformation information to the system, which can be configured directly to determine whether a loading changes.

A change in the longitudinal acceleration filtered confidence value St may be caused by brake, the dynamic drive, uphill or downhill, and the loading. Therefore, in a specific implementation, according to the foregoing embodiment, after excluding the brake working condition, the uphill or downhill working condition, and the dynamic drive working condition, a drop in the longitudinal acceleration filtered confidence value St is only linearly correlated with the loading change. At this time, the relative rolling radius state of the tire changes due to the loading. Therefore, this change is compensated for in this embodiment.

When there is a change in the loading and the effects of the brake, the dynamic drive and the uphill or downhill are excluded, the change in the loading is positively correlated with the change in the longitudinal acceleration filtered confidence value St and the change in the relative rolling radius of the coaxial tire (a load change is generally applied to the coaxial tire). Therefore, the above relation equation (13) is obtained in the actual calibration stage of the system for monitoring the tire pressure of the vehicle through a number of experiments. In an actual drive process, the change in the longitudinal acceleration $S_{T\,load}$ corresponding to the monitored real-time load is substituted into equation (13) and can be calculated to obtain a change $\Delta R_{load}$ in the relative rolling radius of the coaxial tire corresponding to a current load. The calculated change is compensated to a relative rolling radius characteristic Ri of a certain axle tire impacted by the loading working condition, which can eliminate the effect of the loading working condition on the monitoring of the tire pressure.

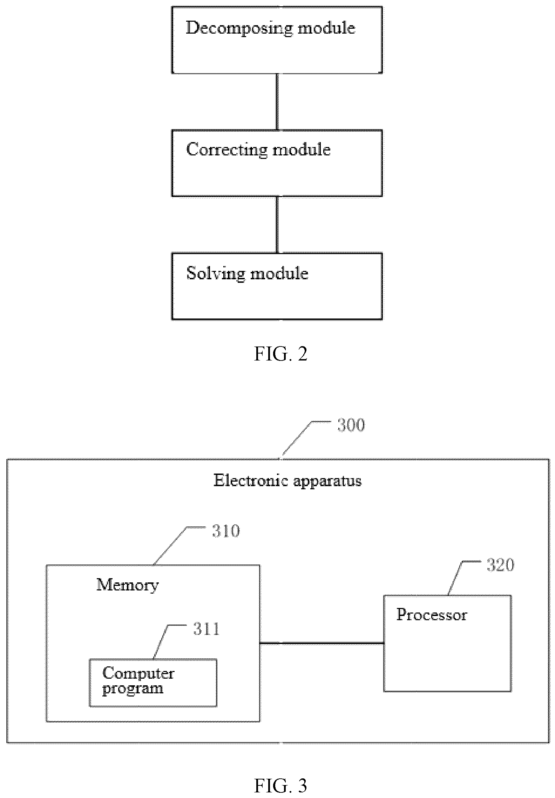

FIG. 2 is a structural diagram of an system for monitoring indirectly a tire pressure applicable to a complex drive working condition provided by an embodiment of the present invention. As shown in FIG. 2, a system for monitoring indirectly a tire pressure applicable to a complex drive working condition includes a decomposing module, a correcting module, and a solving module.

A decomposing module is configured to obtain an independent speed time tamp signal of each tire of a vehicle, and calculate a real-time rolling characteristic of each tire on the basis of the speed time stamp signal of the tire.

A correcting module is configured to obtain a real-time monitoring signal of the vehicle, identify the current working condition of the vehicle on the basis of a state position change of a particular signal value or a signal regular change of the monitoring signal of the vehicle, and analyze and disable or compensate the real-time rolling characteristic on the basis of the current working conditions to correct an abnormal change in the rolling characteristic of the tire caused due to the current working condition.

A solving module is configured to, on the basis of the correspondence between the rolling characteristic and the tire pressure of the tire, calculate the tire pressure on the basis of the corrected rolling characteristic of the tire.

It is understood that a system for monitoring indirectly a tire pressure applicable to a complex drive working condition provided by the present invention corresponds to a method for monitoring indirectly a tire pressure applicable to a complex drive working condition provided by the above embodiment. The relevant technical characteristic of the system for monitoring indirectly the tire pressure applicable to the complex drive working condition can be referred to the relevant technical characteristics of the method for monitoring indirectly the tire pressure applicable to the complex drive working condition, which will not be repeated herein.

Referring to FIG. 3, FIG. 3 is a schematic diagram of an embodiment of an electronic apparatus provided by an embodiment of the present invention. As shown in FIG. 3, an embodiment of the present invention provides an electronic apparatus 300, including a memory 310, a processor 320, and a computer program 311 stored in the memory 310 and executable on the processor 320. The processor 320 realizes the following steps when executing the computer program 311:

S1, obtaining an independent speed time stamp signal of each tire of a vehicle, and calculating a real-time rolling characteristic of each tire on the basis of the speed time stamp signal of the tire;

S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition;

S3, on the basis of the correspondence between the rolling characteristic and the tire pressure of the tire, calculating the tire pressure on the basis of the corrected rolling characteristic of the tire.

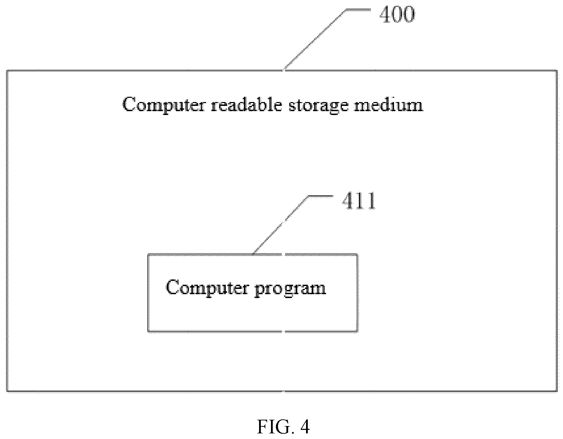

Referring to FIG. 4, FIG. 4 is a schematic diagram of an embodiment of a computer-readable storage medium provided by the present invention. As shown in FIG. 4, the present embodiment provides a computer-readable storage medium 400, having a computer program 411 stored thereon. The computer program 411 implements the following steps when being executed by the processor:

S1, obtaining an independent speed time stamp signal of each tire of a vehicle, and calculating a real-time rolling characteristic of each tire on the basis of the speed time stamp signal of the tire;

S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition;

S3, on the basis of the correspondence between the rolling characteristic and the tire pressure of the tire, calculating the tire pressure on the basis of the corrected rolling characteristic of the tire.

An embodiment of the present invention provides a method and system for monitoring indirectly a tire pressure applicable to a complex drive working condition, an electronic apparatus and a storage medium. The current operating state of a vehicle is identified on the basis of a real-time monitoring signal of the vehicle. A special working condition in an actual vehicle environment, especially for drive working conditions that may affect a rolling characteristic of a tire, such as brake, a mountain road (uphill or downhill and turning), a loading change working condition, a dynamic drive, a rough road surface, and the like, is focused on being identified and dealt with. In the specific implementation, an actual calibration of the vehicle is carried out for a specific vehicle model. Comparison parameters are set for an operating eigenvalue of each type of the vehicle. Different types and degrees of special drive working conditions affect an original rolling characteristic of the tire to different degrees. Therefore, According to different drive working conditions and degrees, the rolling characteristic of the tire is analyzed and disabled or compensated. An abnormal change in the rolling characteristic of the tire caused by a special drive working condition is corrected, so that changes in a relative rolling radius characteristic of the tire and a vibration spectral characteristic are only strongly correlated with a change in the tire pressure, which eliminates the connection between the rolling characteristic of the tire and an unconventional drive working condition, can be configured to determine tire pressure and monitor real-time tire pressure, improves the operating efficiency and accuracy of monitoring indirectly the tire pressure in the actual vehicle environment and reduces a system misidentification rate. Because the monitoring signals of the entire vehicle are all signals of a sensor of an original vehicle, and operation and storage are all based on a ESC controller, there is no need to install other sensors, and there is no need to increase hardware costs.

It should be noted that in the above embodiments, the description of each embodiment has a focus. A part that is not described in detail in a certain embodiment can be referred to the relevant description of other embodiments.

It should be appreciated by a person skilled in the art that an embodiment of the present invention may be provided as a method, a system, or a computer program product. Thus, the present invention may take a form of a fully hardware embodiment, a fully software embodiment, or an embodiment that combines software and hardware aspects. Further, the present invention may take a form of a computer program product implemented on one or more computer-usable storage media (including, but not limited to, a disk memory, CD-ROM, an optical memory, and the like) that contain computer-usable program code therein.

The present invention is described with reference to flowcharts and/or a block diagram of a method, an apparatus (a system), and a computer program product according to an embodiment of the present invention. It is to be understood that each of the processes and/or blocks in a flowchart and/or a block diagram and the combination of the processes and/or the blocks in the flowcharts and/or block diagrams may be implemented by computer program instructions. These computer program instructions may be provided to a processor of a general-purpose computer, a special-purpose computer, an embedded computer, or other programmable data-processing device to produce one machine so that instructions executed by the processor of the computer or other programmable data-processing device produce a device for carrying out a function specified in one process or the plurality of processes of the flowchart and/or the one block or a plurality of blocks of the box diagram.

These computer program instructions may also be stored in computer-readable memory capable of directing a computer or other programmable data processing devices to operate in a particular manner so that the instructions stored in the computer-readable memory produce a manufacture article including an instruction device. The instruction device implements the function specified one process or the plurality of processes in the flowchart and/or one block or the plurality of blocks of the block diagram.

These computer program instructions may also be loaded onto the computer or other programmable data processing devices so that a series of operational steps are performed on the computer or other programmable devices to produce computer-implemented processing. Therefore, the instructions executed on the computer or other programmable devices provide steps for implementing the function specified in one process or the plurality of processes of the flowchart and/or one block or the plurality of blocks of the block diagram.

**Claims**

1. A method for monitoring indirectly a tire pressure applicable to a complex drive working condition, comprising:

> S1, obtaining an independent speed time stamp signal of each tire of a vehicle, and calculating a real-time rolling characteristic of each tire on the basis of the speed time stamp signal of the tire; wherein the real-time rolling characteristic comprises a vibration spectrum characteristic Fi and a relative rolling radius characteristic Ri;
> S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition ;
> S3, on the basis of the correspondence between the rolling characteristic and the tire pressure of the tire, calculating the tire pressure on the basis of the corrected rolling characteristic of the tire;
> **characterized in that** step S2 specifically comprises: obtaining a real-time brake flag position signal from the monitoring signal of the entire vehicle, obtaining, according to the state position change of the brake flag position signal, a moment $t_0$ when brake is generated and a moment $t_1$ when the brake is lifted; obtaining rolling angular-speed change values $\Delta\omega_{FL}$, $\Delta\omega_{FR}$, $\Delta\omega_{RL}$, and $\Delta\omega_{RR}$ corresponding to each of the tires from the speed time stamp signal of each of the tires, obtaining a moment $t_2$ when a rolling angular-speed of the tire is zero, and calculating a brake degree B of the vehicle by the following equation:

$$\Delta t = \begin{cases} t_2 - t_0, t_2 < t_1 \\ t_1 - t_0, t_1 < t_2 \end{cases} \tag{1}$$

$$\omega = 1/4(\Delta\omega_{FL} + \Delta\omega_{FR} + \Delta\omega_{RL} + \Delta\omega_{RR}) \tag{2}$$

$$B = \omega/\Delta t \tag{3},$$

> wherein $\Delta t$ is actual brake time, and $\omega$ is a change value of the rolling angular-speed of the tire;
> comparing the calculated brake degree B with a preset brake identification parameter $B_0$ of the vehicle, and setting the brake identification parameter $B_0$ of the vehicle on the basis of actual calibration results of the vehicle:

>> if $B \leq B_0$, determining that the current working condition of the vehicle is in an ordinary brake and requiring no correction of the rolling characteristic of the tire;
>> if $B > B_0$, determining that the current working condition of the vehicle is in an emergency brake, and analyzing and disabling the relative rolling radius characteristic Ri of the tire to stop the calculation of the relative rolling radius characteristics Ri from being updated until the emergency brake is determined to be lifted.

2. A method for monitoring indirectly a tire pressure applicable to a complex drive working condition, comprising:

S1, obtaining an independent speed time stamp signal of each tire of a vehicle, and calculating a real-time rolling characteristic of each tire on the basis of the speed time stamp signal of the tire; wherein the real-time rolling characteristic comprises a vibration spectrum characteristic Fi and a relative rolling radius characteristic Ri;

S2, obtaining a real-time monitoring signal of the vehicle, identifying a current working condition of the vehicle on the basis of a state position change of a particular signal value or a signal regular change of the monitoring signal of the entire vehicle, and analyzing and disabling or compensating the real-time rolling characteristic on the basis of the current working condition to correct an abnormal change in a rolling characteristic of the tire caused due to the current working condition;

S3, on the basis of the correspondence between the rolling characteristic and the tire pressure of the tire, calculating the tire pressure on the basis of the corrected rolling characteristic of the tire;

**characterized in that** step S2 specifically comprises: obtaining a real-time lateral acceleration L and a yaw rate Y on the basis of the monitoring signal of the entire vehicle, and calculating a discrete degree D(L) of a lateral acceleration and a discrete degree D(Y) of the yaw rate during k sampling periods, respectively:

$$D(L) = \sum_{i=1}^{k} 1/k \, (Li - l)^2 \qquad (4),$$

$$D(Y) = \sum_{j=1}^{k} 1/k \, (Yj - y)^2 \qquad (5),$$

wherein Li is a lateral acceleration data collected in an i-th cycle, $i \in [1,k]$; Yjis a yaw rate data collected in the i-th cycle, $j \in [1,k]$, and k is a natural number;

calculating a real-time turning working condition weighted value W(h) on the basis of the discrete degree D(L) of the lateral acceleration and the discrete degree D(Y) of the yaw rate:

$$W(h) = \sqrt[m+n]{D(Y)^n D(L)^m} \qquad (6),$$

wherein m and n are weighted parameters, which are set according to model parameters and a real-time turning characteristic of the vehicle;

comparing the turning working condition weighted value W(h) with a weighted threshold $W_0$, determining whether the working condition is currently a turning working condition:

if $W(h) < W_0$, determining that the working condition is not currently the turning working condition and requiring no correction of the rolling characteristic of the tire;

if $W(h) > 2W_0$, determining that the working condition is currently turning and loading composite conditions, and analyzing and disabling the relative rolling radius characteristic Ri of the tire and the vibration frequency spectrum characteristic Fi to stop calculation of the real-time rolling characteristic of the tire from being updated until the current working condition is determined to be ended;

if $W_0 \leq W(h) \leq 2W_0$, determining that the working condition is currently the turning working condition, and calculating real-time yaw rate information Y(t) by the following equation (7):

$$Y(t) = \pm[(R_{FL} + R_{RL})/2 - (R_{FR} + R_{RR})/2]/A \qquad (7),$$

wherein A is a tire spacing parameter of the vehicle, $R_{FL}$, $R_{RL}$, $R_{FR}$ and $R_{RR}$ are relative rolling radius values of the tires of the vehicle, respectively;

calculating a speed difference $\Delta R$ between the tires on both sides of the vehicle by the following equation (8):

$$\Delta R = \pm AY(t) \qquad (8),$$

wherein the positive or negative number of $\Delta R$ is related to a turning direction;

the speed difference $\Delta R$ between the tires on the both sides of the vehicle is compensated into the relative rolling radius characteristic Ri of the tire on a side of the vehicle with an abnormally decreasing rolling radius

3. The method for monitoring indirectly the tire pressure applicable to the complex drive working condition according to claim 1 or 2, **characterized in that** step S2 comprises:

selecting two frequencies having the highest degree of impact on road surface excitation, extracting frequency spectrum eigenvalues corresponding to the two frequencies from the vibration frequency spectrum characteristic Fi of each tire of the vehicle, respectively, and obtaining a first frequency spectrum eigenvalue and a second frequency spectrum eigenvalue;

according to changes in the amplitude of the first frequency spectrum eigenvalue and the amplitude of the second frequency spectrum eigenvalue over time, combining with a change in the relative rolling radius characteristic Ri of the tire over time to determine whether each tire is currently in a non-identically proportional underpressure state or an identically proportional underpressure state:

if it is determined that the tire is in the non-identically proportional underpressure state or the identically proportional underpressure state, stopping rough road surface identification;

if it is determined that the tire is not in the non-identically proportional underpressure state or the identically proportional underpressure state, averaging the first frequency spectrum eigenvalue and the second frequency spectrum eigenvalue to obtain a first frequency vibration characteristic compensation value Power1 and a second frequency vibration characteristic compensation value Power2 that reflect roughness of a road surface, and compensating the first frequency vibration characteristic compensation value Power1 and the second frequency vibration characteristic compensation value Power2 into the vibration frequency spectrum characteristic Fi of each of the tires of the vehicle.

4. The method for monitoring indirectly the tire pressure applicable to the complex drive working condition according to claim 3, **characterized in that** according to the changes in the amplitude of the first frequency spectrum eigenvalue and the amplitude of the second frequency spectrum eigenvalue over time, combining with the change in the relative rolling radius characteristic Ri of the tire over time to determine whether each tire is currently in the non-identically proportional underpressure state or the identically proportional underpressure state comprises:

if the magnitude of the first frequency spectrum eigenvalue, the magnitude of the second frequency spectrum eigenvalue, and the relative rolling radius characteristic Ri of the tire change synchronously over time, determining that the four tires are currently in the non-identically proportional underpressure state;

if the relative rolling radius characteristic Ri of the tire changes less in a certain time period, and the magnitude of the first frequency spectrum eigenvalue and the magnitude of the second frequency spectrum eigenvalue change in a consistent pattern over time, determining that the four tires are in the identically proportional underpressure state.

5. The method for monitoring indirectly the tire pressure applicable to the complex drive working condition according to claim 1, 2 or 4, **characterized in that** step S2 comprises:

obtaining a time domain-based longitudinal acceleration signal Xt according to the monitoring signal of the entire vehicle, and obtaining a smooth and plausible longitudinal acceleration filtered confidence value St after filtering through equation (9):

$$S_t = \alpha Xt + (1-\alpha)S_{t-1} \qquad (9),$$

wherein $\alpha$ is a filtered parameter, and $S_{t-1}$ is a longitudinal acceleration filtered confidence value at a previous moment;

obtaining a speed of a driven tire of the vehicle on the basis of the speed times tamp signal of the tire, and obtaining an actual acceleration Area of the vehicle on the basis of a change rate of the speed of the driven tire of the vehicle per unit time;

calculating an average value Vi of the speeds of the two driven tires and an average value Vo of speeds of two driving tires on the basis of speed time stamp signals of the four tires, and calculating a driving slip rate H on the basis of the average value Vi of the speeds of the two driven tires and the average value Vo of the speeds of the two driving tires:

$$H = \frac{Vi - V0}{Vi} \times 100\% \qquad (10);$$

determining whether the vehicle is currently in an uphill or downhill condition on the basis of the longitudinal acceleration filtered confidence value St, the actual acceleration Area of the vehicle, and the driving slip rate H:

if St > H/$H_0$Area, determining that the vehicle is in the uphill or downhill working condition; wherein $H_0$ is a slip rate threshold;
if H < $H_0$ when the vehicle is in the uphill or downhill working condition, requiring no correction of the rolling characteristic of the tire.

6. The method for monitoring indirectly the tire pressure applicable to the complex drive working condition according to claim 5, **characterized in that** step S2 comprises:

obtaining a time domain-based torque fluctuation signal T(h) on the basis of the monitoring signal of the entire vehicle, and calculating a dynamic driving degree $T_{va}$ of the vehicle by combining a torque value T at a uniform speed:

$$T_{va} = T(h)/T \qquad (11),$$

determining whether the vehicle is in a dynamic drive working condition according to the dynamic driving degree $T_{va}$ and a driving slip rate H:

if H ≥ $H_0$ and $T_{va}$ > $T_C$, determining that the vehicle is in the dynamic drive working condition, wherein $T_C$ is a dynamic driving threshold, and the value of $T_C$ is set empirically;
for the dynamic drive working condition, calculating a gain by the following equation (12) for a relative rolling radius of the driving tire:

$$R = R_{driving} * f(H) \qquad (12),$$

wherein, f (H) is a gain function related to a current driving slip rate; $R_{driving}$ is the relative rolling radius of the driving tire; R is the relative rolling radius of the driving tire after the calculation of the gain;
updating the relative rolling radius R of the gained driving tire to the relative rolling radius characteristic Ri.

7. The method for monitoring indirectly the tire pressure applicable to the complex drive working condition according to claim 6, **characterized in that** step S2 further comprises:

determining that the vehicle is currently in the loading working condition, if it is determining that the vehicle is not currently in the brake working condition, the uphill or downhill working condition, or the dynamic drive working condition, and if it is determined that a loading change currently is provided according to a longitudinal acceleration filtered confidence value St;
obtaining a longitudinal acceleration change $S_{T\,load}$ corresponding to different loads M of the vehicle recorded during an actual calibration stage of the vehicle, a longitudinal acceleration change $S_{T\,unloaded}$ when no load is provided, and a relative rolling radius change $\Delta R_{load}$ of a coaxial tire, and providing the following relational equation when the load M is in the range of a load of the entire vehicle:

$$\Delta R_{load} = p(S_{T\,load} - S_{T\,unloaded}) \qquad (13),$$

wherein p is a proportional factor;
substituting the longitudinal acceleration change $S_{T\,load}$ corresponding to the current load of the vehicle into equation (13) to calculate the relative rolling radius change $\Delta R_{load}$ of the coaxial tire corresponding to the current load;
compensating the calculated relative rolling radius change $\Delta R_{load}$ of the coaxial tire into the relative rolling radius characteristic Ri of the tire that changes abnormally due to the loading working condition.

8. A system for monitoring indirectly a tire pressure applicable to a complex drive working condition, comprising:

a decomposing module, configured to obtain an independent speed time tamp signal of each tire of a vehicle, and calculate a real-time rolling characteristic of each tire on the basis of the speed time stamp signal of the tire; wherein the real-time rolling characteristic comprises a vibration spectrum characteristic Fi and a relative rolling radius characteristic Ri;

a correcting module, configured to obtain a real-time monitoring signal of the vehicle, identify the current working condition of the vehicle on the basis of a state position change of a particular signal value or a signal regular change of the monitoring signal of the vehicle, and analyze and disable or compensate the real-time rolling characteristic on the basis of the current working conditions to correct an abnormal change in the rolling characteristic of the tire caused due to the current working condition;

a solving module, configured to, on the basis of the correspondence between the rolling characteristic and the tire pressure of the tire, calculate the tire pressure on the basis of the corrected rolling characteristic of the tire;

**characterized in that** the correcting module specifically comprising:

obtaining a real-time brake flag position signal from the monitoring signal of the entire vehicle, obtaining, according to the state position change of the brake flag position signal, a moment $t_0$ when brake is generated and a moment $t_1$ when the brake is lifted; obtaining rolling angular-speed change values $\Delta\omega_{FL}$, $\Delta\omega_{FR}$, $\Delta\omega_{RL}$, and $\Delta\omega_{RR}$ corresponding to each of the tires from the speed time stamp signal of each of the tires, obtaining a moment $t_2$ when a rolling angular-speed of the tire is zero, and calculating a brake degree B of the vehicle by the following equation:

$$\Delta t = \begin{cases} t_2 - t_0, t_2 < t_1 \\ t_1 - t_0, t_1 < t_2 \end{cases} \tag{1}$$

$$\omega = 1/4(\Delta\omega_{FL} + \Delta\omega_{FR} + \Delta\omega_{RL} + \Delta\omega_{RR}) \tag{2}$$

$$B = \omega/\Delta t \tag{3}$$

wherein $\Delta t$ is actual brake time, and $\omega$ is a change value of the rolling angular-speed of the tire;

comparing the calculated brake degree B with a preset brake identification parameter $B_0$ of the vehicle, and setting the brake identification parameter $B_0$ of the vehicle on the basis of actual calibration results of the vehicle:

if $B \leq B_0$, determining that the current working condition of the vehicle is in an ordinary brake and requiring no correction of the rolling characteristic of the tire;

if $B > B_0$, determining that the current working condition of the vehicle is in an emergency brake, and analyzing and disabling the relative rolling radius characteristic Ri of the tire to stop the calculation of the relative rolling radius characteristics Ri from being updated until the emergency brake is determined to be lifted.

9. A system for monitoring indirectly a tire pressure applicable to a complex drive working conditions, comprising:

a decomposing module, configured to obtain an independent speed time tamp signal of each tire of a vehicle, and calculate a real-time rolling characteristic of each tire on the basis of the speed time stamp signal of the tire; wherein the real-time rolling characteristic comprises a vibration spectrum characteristic Fi and a relative rolling radius characteristic Ri;

a correcting module, configured to obtain a real-time monitoring signal of the vehicle, identify the current working condition of the vehicle on the basis of a state position change of a particular signal value or a signal regular change of the monitoring signal of the vehicle, and analyze and disable or compensate the real-time rolling characteristic on the basis of the current working conditions to correct an abnormal change in the rolling characteristic of the tire caused due to the current working condition;

a solving module, configured to, on the basis of the correspondence between the rolling characteristic and the tire pressure of the tire, calculate the tire pressure on the basis of the corrected rolling characteristic of the tire;

**characterized in that** the correcting module specifically comprising:

obtaining a real-time lateral acceleration L and a yaw rate Y on the basis of the monitoring signal of the entire vehicle, and calculating a discrete degree D(L) of a lateral acceleration and a discrete degree D(Y) of the yaw rate during k sampling periods, respectively:

$$D(L) = \sum_{i=1}^{k} 1/k \ (Li - l)^2 \qquad (4),$$

$$D(Y) = \sum_{j=1}^{k} 1/k \ (Yj - y)^2 \qquad (5),$$

wherein Li is a lateral acceleration data collected in an i-th cycle, $i \in [1,k]$; Yjis a yaw rate data collected in the i-th cycle, $j \in [1,k]$, and k is a natural number;
calculating a real-time turning working condition weighted value W(h) on the basis of the discrete degree D(L) of the lateral acceleration and the discrete degree D(Y) of the yaw rate:

$$W(h) \ = \ \sqrt[m+n]{D(Y)^n D(L)^m} \qquad (6),$$

wherein m and n are weighted parameters, which are set according to model parameters and a real-time turning characteristic of the vehicle;
comparing the turning working condition weighted value W(h) with a weighted threshold $W_0$, determining whether the working condition is currently the turning working condition:

if $W(h) < W_0$, determining that the working condition is not currently the turning working condition, requiring no correction of the rolling characteristic of the tire;
if $W(h) > 2W_0$, determining that the working condition is currently turning and loading composite conditions, and analyzing and disabling the relative rolling radius characteristic Ri of the tire and the vibration frequency spectrum characteristic Fi to stop the calculation of the real-time rolling characteristic of the tire from being updated until the current working condition is determined to be ended;
if $W_0 \leq W(h) \leq 2W_0$, determining that the working condition is currently the turning working condition, and calculating real-time yaw rate information Y(t) by the following equation (7):

$$Y(t)= \pm [(R_{FL}+R_{RL})/2-(R_{FR}+R_{RR})/2]/A \qquad (7),$$

wherein A is a tire spacing parameter of the vehicle. $R_{FL}$, $R_{RL}$, $R_{FR}$ and $R_{RR}$ are relative rolling radius values of the tires of the vehicle, respectively;
calculating a speed difference $\Delta R$ between the tires on both sides of the vehicle by the following equation (8):

$$\Delta R= \pm AY(t) \qquad (8),$$

wherein the positive or negative number of $\Delta R$ is related to a turning direction;
the speed difference $\Delta R$ between the tires on the both sides of the vehicle is compensated into the relative rolling radius characteristic Ri of the tire on a side of the vehicle with an abnormally decreasing rolling radius.

**Patentansprüche**

1.  Verfahren zur indirekten Überwachung des Reifendrucks unter komplexen Fahrbedingungen, umfassend:

    S1, Erfassen eines unabhängigen Geschwindigkeits-Zeitstempelsignals jedes Reifens eines Fahrzeugs, und Berechnen einer Echtzeit-Rollcharakteristik jedes Reifens auf der Grundlage des Geschwindigkeits- Zeitstempelsignals des Reifens; wobei die Echtzeit-Rollcharakteristik eine Schwingungsspektrumcharakteristik Fi und eine relative Rollradiuscharakteristik Ri umfasst;
    S2 , Erfassen eines Echtzeit-Überwachungssignals des Fahrzeugs, Identifizieren eines aktuellen Arbeitszustands des Fahrzeugs auf der Grundlage einer Zustandspositionsänderung eines bestimmten en Signalwertes oder einer regelmäßigen Signaländerung des Überwachungssignals des gesamten Fahrzeugs und Analysieren und Deaktivieren oder Kompensieren der Echtzeit-Rollcharakteristik auf der Grundlage des aktuellen Betriebszustands, um eine abnormale Änderung der Rollcharakteristik des Reifens zu korrigieren, die durch den aktuellen Betriebszustand verursacht wird.

S3, basierend auf der Korrespondenz zwischen den Rolleigenschaften und dem Reifendruck des Reifens, Berechnung des Reifendrucks auf der Grundlage der korrigierten Rollcharakteristik des Reifens; **gekennzeichnet dadurch, dass** Schritt S2 speziell umfasst: Erfassen eines Echtzeit-Bremsflagsignals aus den Fahrzeugüberwachungssignalen; und Bestimmen der Bremsbetätigungszeit to und der Bremsfreigabezeit $t_1$ auf der Grundlage des Zustandsübergangs des Bremsflagsignals., wenn die Bremse gelöst wird; Ermitteln der Werte für die Änderung der Rollwinkelgeschwindigkeit$\Delta\omega_{FL}$, $\Delta\omega_{FR}$, $\Delta\omega_{RL}$, $\Delta\omega_{RR}$, die jedem der Reifen entsprechen, aus dem Geschwindigkeitszeitstempelsignal jedes der Reifen, Ermitteln eines Zeitpunkts $t_2$, wenn die Rollwinkelgeschwindigkeit des Reifens Null ist, und Berechnen eines Bremsgrades B des Fahrzeugs durch die folgende Gleichung:

$$\Delta t = \begin{cases} t_2 - t_0, t_2 < t_1 \\ t_1 - t_0, t_1 < t_2 \end{cases} \qquad (1) \; ,$$

$$\omega = 1/4(\Delta\omega_{FL} + \Delta\omega_{FR} + \Delta\omega_{RL} + \Delta\omega_{RR}) \qquad (2) \; ,$$

$$B = \omega / \Delta t \qquad (3) \; ,$$

wobei $\Delta t$ die tatsächliche Bremszeit und $\omega$ ein Änderungswert der Rollwinkelgeschwindigkeit des Reifens ist; Vergleichen des berechneten Bremsgrades B mit einem voreingestellten Bremsidentifikationsparameter $B_0$ des Fahrzeugs und Einstellen des Bremsidentifikationsparameters $B_0$ des Fahrzeugs auf der Grundlage der tatsächlichen Kalibrierungsergebnisse des Fahrzeugs:

wenn $B \le B_0$, Feststellen, dass sich das Fahrzeug derzeit in einem normalen Bremszustand befindet und keine Korrektur der Rollcharakteristik des Reifens erforderlich ist;
wenn $B > B_0$ feststellt, dass sich das Fahrzeug derzeit in einem Notbremszustand befindet, und die relative Rollradiuscharakteristik Ri des Reifens analysiert und deaktiviert, um zu verhindern, dass die Berechnung der relativen Rollradiuscharakteristik Ri aktualisiert wird, bis festgestellt wird, dass die Notbremse gelöst ist.

2.  Verfahren zur indirekten Überwachung des Reifendrucks, anwendbar auf einen komplexen Antriebszustand -Betriebszustand, umfassend:

S1, Erfassen eines unabhängigen Geschwindigkeitszeitstempelsignals jedes Reifens eines Fahrzeugs und Berechnen einer Echtzeit-Rollcharakteristik jedes Reifens auf der Grundlage des Geschwindigkeitszeitstempelsignals des Reifens; wobei die Echtzeit-Rollcharakteristik eine Schwingungsspektrumcharakteristik Fi und eine relative Rollradiuscharakteristik Ri umfasst; Schwingungsspektrumcharakteristik Fi und eine relative Rollradiuscharakteristik Ri umfasst;
S2, Erfassen eines Echtzeit-Überwachungssignals des Fahrzeugs, Identifizieren eines aktuellen Betriebszustands des Fahrzeugs auf der Grundlage einer Zustandspositionsänderung eines bestimmten Signalwerts oder einer regelmäßigen Signaländerung des Überwachungssignals des gesamten Fahrzeugs und Analysieren und Deaktivieren oder Kompensieren der Echtzeit-Rollcharakteristik auf der Grundlage des aktuellen Betriebszustands, um eine abnormale Änderung der Rollcharakteristik zu korrigieren des Reifens, die durch den aktuellen Betriebszustand verursacht wird;
S3, auf der Grundlage der Übereinstimmung zwischen der Rollcharakteristik und dem Reifendruck des Reifens, Berechnen des Reifendrucks auf der Grundlage der korrigierten Rollcharakteristik des Reifens; **dadurch gekennzeichnet, dass** Schritt S2 insbesondere umfasst: Ermitteln einer Echtzeit-Querbeschleunigung L und einer Gierrate Y auf der Grundlage des Überwachungssignals des gesamten Fahrzeugs und Berechneneines diskreten Grades D(L) einer Querbeschleunigung und eines diskreten Grades D(Y) der Gierrate während kAbtastperioden:

$$D(L) = \sum_{i=1}^{k} 1/k(L_i - l)^2 \qquad (4)$$

$$D(Y) = \sum_{j=1}^{k} \frac{1}{k}(Y_j - y)^2 \qquad (5),$$

wobei Li die in einem i-ten Zyklus gesammelten Querbeschleunigungsdaten sind, $i \in [1,k]$; Yj die im j-ten Zyklus gesammelten Gierratendaten sind, $j \in [1,k]$, und k eine natürliche Zahl ist;

Berechnung eines gewichteten Echtzeit-Drehbetriebszustandswerts W(h) auf der Grundlage des Diskretisierungsgrads D(L) der Querbeschleunigung und des Diskretisierungsgrads D(Y) der Gierrate:

$$W(h) = \sqrt[m+n]{D(Y)^n D(L)^m} \qquad (6),$$

wobei m und n gewichtete Parameter sind, die gemäß den Modellparametern und einer Echtzeit-Kurvenfahrcharakteristik des Fahrzeugs festgelegt werden;

Vergleichen des gewichteten Werts W(h) für den Drehbetriebszustand mit einem gewichteten Schwellenwert $W_0$, um zu bestimmen, ob der Betriebszustand derzeit ein Drehbetriebszustand ist:

wenn W (h) < $W_0$, Feststellen, dass die Betriebsbedingung derzeit keine Kurvenfahrbedingung ist und keine Korrektur der Rollcharakteristik des Reifens erforderlich ist;

wenn W(h) > 2$W_0$, Feststellen, dass die Betriebsbedingung derzeit eine kombinierte Dreh- und Belastungsbedingung ist, und Analysieren und Deaktivieren der relativen Rollradiuscharakteristik Ri des Reifens und der Schwingungsfrequenzspektrumcharakteristik Fi, um zu stoppen berechnung der Echtzeit-Rollcharakteristik des Reifens, beginnend mit der Aktualisierung bis zur Feststellung, dass die aktuelle Arbeitsbedingung beendet ist;

wenn $W_0 \leq$ W (h) $\leq 2W_0$, Feststellen, dass der Betriebszustand derzeit der Drehbetriebszustand ist, und Berechnen der Echtzeit-Gierrateninformation Y(t) durch die folgende Gleichung (7):

$$Y(t) = \pm[(R_{FL} + R_{RL})/2 - (R_{FR} + R_{RR})/2]/A \qquad (7),$$

wobei A ein Reifenabstandsparameter des Fahrzeugs ist, $R_{FL}, R_{RL}, R_{FR},$ und $R_{RR}$ jeweils relative Rollradiuswerte der Reifen des Fahrzeugs sind;

Berechnung einer Geschwindigkeitsdifferenz $\Delta R$ zwischen den Reifen auf beiden Seiten des Fahrzeugs anhand der folgenden Gleichung (8):

$$\Delta R = \pm AY(t) \qquad (8),$$

wobei die positive oder negative Zahl von $\Delta R$ mit der Drehrichtung zusammenhängt;

die Geschwindigkeitsdifferenz $\Delta R$ zwischen den Reifen auf beiden Seiten des Fahrzeugs wird in die relative Rollradiuscharakteristik Ri des Reifens auf einer Seite des Fahrzeugs mit einem abnormal abnehmenden Rollradius kompensiert.

3. Verfahren zur indirekten Überwachung des Reifendrucks, das auf die komplexen Antriebsbedingungen gemäß Anspruch 1 oder 2 anwendbar ist, **dadurch gekennzeichnet, dass** Schritt S2 umfasst: Auswählen von zwei Frequenzen, die den größten Einfluss auf die Erregung der Straßenoberfläche haben, Extrahieren von Frequenz-Eigenwerten Eigenwerte des Frequenzspektrums extrahiert werden, die denbeiden

Frequenzen aus der Schwingungsfrequenzspektrumcharakteristik Fi jedes Reifens des Fahrzeugs extrahiert werden und ein erster Frequenzspektrum-Eigenwert und ein zweiter Frequenzspektrum-Eigenwert erhalten werden;

entsprechend den Änderungen der Amplitude des ersten Eigenwerts des Frequenzspektrums und der Amplitude des zweiten Eigenwerts des Frequenzspektrums im Laufe der Zeit, kombiniert mit einer Änderung der relativen Rollradiuscharakteristik Ri des Reifens im Laufe der Zeit, um zu bestimmen, ob sich jeder Reifen derzeit in einem nicht identisch proportionalen Unterdruckzustand oder einem identisch proportionalen Unterdruckzustand befindet:

wenn festgestellt wird, dass sich der Reifen im nicht identisch proportionalen Unterdruckzustand oder im identisch proportionalen Unterdruckzustand befindet, wird die Identifizierung einer unebenen Straßenoberfläche beendet;

wenn festgestellt wird, dass sich der Reifen nicht im nicht identisch proportionalen Unterdruckzustand oder im identisch proportionalen Unterdruckzustand befindet, Mittelwertbildung des ersten Frequenzspektrum-Eigenwerts und des zweiten Frequenzspektrum-Eigenwerts, um einen ersten Frequenzschwingungseigenschaftskompensationswert Power1 und einen zweiten Frequenzschwingungseigenschaftskompensationswert Power2, die die Rauheit einer Straßenoberfläche widerspiegeln, und Kompensieren des ersten Frequenzschwingungseigenschaftskompensationswerts Power1 und des zweiten Frequenzschwingungseigenschaftskompensationswerts Power2 in die Schwingungsfrequenzspektrumseigenschaft Fi jedes der Reifen des Fahrzeugs.

4.  Verfahren zur indirekten Überwachung des Reifendrucks, das auf die komplexen Antriebsbetriebsbedingungen gemäß Anspruch 3 anwendbar ist, **dadurch gekennzeichnet, dass** anhand der Änderungen der Amplitude des ersten Frequenzspektrum-Eigenwerts und der Amplitude des zweiten Frequenzspektrum-Eigenwerts im Laufe der Zeit in Kombination mit der Änderung der relativen Rollradiuscharakteristik Ri des Reifens im Laufe der Zeit bestimmt wird, ob sich jeder Reifen sich derzeit im nicht identisch proportionalen Unterdruckzustand oder im identisch proportionalen Unterdruckzustand befindet, umfasst:

Wenn sich die Größe des ersten Eigenwerts des Frequenzspektrums, die Größe des zweiten Eigenwerts des Frequenzspektrums und die relative Rollradiuscharakteristik Ri des Reifens im Laufe der Zeit synchron ändern, wird festgestellt, dass sich die vier Reifen derzeit indem nicht identisch proportionalen Unterdruckzustand befinden;

wenn sich die relative Rollradiuscharakteristik Ri des Reifens in einem bestimmten Zeitraum weniger ändert und sich die Größe des ersten Frequenzspektrum-Eigenwerts und die Größe des zweiten Frequenzspektrum-Eigenwerts im Laufe der Zeit in einem konsistenten Muster ändern, wird festgestellt, dass sich die vier Reifen in einem identisch proportionalen Unterdruckzustand befinden.

5.  Verfahren zur indirekten Überwachung des Reifendrucks, das auf die komplexen Antriebsbetriebsbedingungen gemäß Anspruch 1, 2 oder 4 anwendbar ist, **dadurch gekennzeichnet, dass** Schritt S2 umfasst:

Erhalten eines zeitbereichsbasierten Längsbeschleunigungssignals Xt gemäß dem Überwachungssignal des gesamten Fahrzeugs und Erhalten eines glatten und plausiblen gefilterten Konfidenzwerts St für die Längsbeschleunigung nach dem Filtern durch Gleichung (9):

$$S_t = \alpha X_t + (1 - \alpha)S_{t-1} \tag{9};$$

wobei $\alpha$ ein gefilterter Parameter ist und $S_{t-1}$ ein gefilterter Vertrauenswert für die Längsbeschleunigung zu einem früheren Zeitpunkt ist;

Ermitteln der Geschwindigkeit eines angetriebenen Reifens des Fahrzeugs anhand des Geschwindigkeitszeitstempelsignals des Reifens und Ermitteln der tatsächlichen Beschleunigung $A_{rea}$ des Fahrzeugs anhand der Änderungsrate der Geschwindigkeit des angetriebenen Reifens des Fahrzeugs pro Zeiteinheit;

Berechnung eines Durchschnittswerts Vi der Geschwindigkeiten der beiden angetriebenen Reifen und eines Durchschnittswerts $V_0$ der Geschwindigkeiten der beiden Antriebsreifen auf der Grundlage der Geschwindigkeits-Zeitstempelsignale deren vier Reifen und Berechnen einer Antriebsschlupfrate H auf der Grundlage des Durchschnittswerts Vi der Geschwindigkeiten der beiden angetriebenen Reifen und des Durchschnittswerts $V_0$ der Geschwindigkeiten der beiden Antriebsreifen:

$$H = \frac{V_i - V_0}{V_i} \times 100\% \tag{10},$$

Ermitteln, ob sich das Fahrzeug derzeit in einem Steigungs- oder Gefällezustand befindet, anhand des gefilterten Konfidenzwerts der Längsbeschleunigung St, der tatsächlichen Beschleunigung $A_{rea}$ des Fahrzeugs und der Antriebs-Schlupfrate H:

wenn $S_t > H/H_0$ $A_{rea}$, wird festgestellt, dass sich das Fahrzeug in einem Bergauf- oder Bergab-Betriebs-zustand befindet; wobei $H_0$ ein Schlupfschwellenwert ist;

wenn $H < H_0$, wenn sich das Fahrzeug in einem Bergauf- oder Bergab-Betriebszustand befindet, wird Folgendes verlangt keine Korrektur der Rollcharakteristik des Reifens.

6.  Verfahren zur indirekten Überwachung des Reifendrucks, das auf die komplexen Antriebsbedingungen gemäß Anspruch 5 anwendbar ist, **dadurch gekennzeichnet, dass** Schritt S2 umfasst:

Erhalten eines zeitbereichsbasierten Drehmomentschwankungssignals T(h) auf der Grundlage des Überwachungssignals des gesamten Fahrzeugs und Berechnen eines dynamischen Fahrgrades $T_{va}$ of des Fahrzeugs durch Kombinieren eines Drehmomentwerts T bei einer gleichmäßigen Geschwindigkeit:

$$T_{va} = T(h)/T \qquad (11),$$

Bestimmen, ob sich das Fahrzeug in einem dynamischen Fahrzustand befindet, basierend auf dem dynamischen Fahrgrad $T_{va}$ und einer Fahrschlupfrate H:

wenn $H \geq H_0$ und $T_{va} > T_c$, Feststellen, dass sich das Fahrzeug im dynamischen Fahrzustand befindet, wobei Tc ein dynamischer Fahrschwellenwert ist und der Wert von Tc empirisch festgelegt wird;
für den dynamischen Fahrzustand Berechnung einer Verstärkung durch die folgende Gleichung (12) für einen relativen Rollradius des Antriebsreifens berechnet:

$$\mathbf{R} = \mathbf{R}_{driving} * \mathbf{f(H)} \qquad (12),$$

wobei f (H) eine Verstärkungsfunktion ist, die sich auf eine aktuelle Antriebsschlupfrate bezieht; $\mathbf{R}_{driving}$ der relative Rollradius des Antriebsreifens ist; R der relative Rollradius des Antriebsreifens nach der Berechnung der Verstärkung ist;
Aktualisieren des relativen Rollradius R des angetriebenen Reifens auf die relative Rollradiuscharakteristik Ri.

7. Verfahren zur indirekten Überwachung des Reifendrucks, das auf die komplexen Antriebsbetriebsbedingungen gemäß Anspruch 6 anwendbar ist, **dadurch gekennzeichnet, dass** Schritt S2 ferner umfasst:

Feststellen, dass sich das Fahrzeug derzeit im Ladebetriebszustand befindet, wenn festgestellt wird, dass sich das Fahrzeug derzeit nicht im Bremsbetriebszustand, im Bergauf- oder Bergab-Betriebszustand oder im dynamischen Fahrbetriebszustand befindet, und wenn festgestellt wird, dass derzeit eine Ladungsänderung gemäß einem gefilterten Vertrauenswert St für die Längsbeschleunigung bereitgestellt wird;
Erhalten einer Längsbeschleunigungsänderung $S_T$ load, die verschiedenen Lasten M des Fahrzeugs entspricht, die während einer tatsächlichen Kalibrierungsphase des Fahrzeugs aufgezeichnet wurden, einer Längsbeschleunigungsänderung $S_T$ unloaded, wenn keine Last bereitgestellt wird, und einer relativen Rollradiusänderun $\Delta R_{load}$ eines koaxialen Reifens, und Bereitstellen der folgenden relationalen Gleichung, wenn die Last M im Bereich einer Last des gesamten Fahrzeugs liegt:

$$\Delta R_{load} = p(S_{T_{load}} - S_{T_{unloaded}}) \qquad (13),$$

wobei p ein Proportionalitätsfaktor ist;
Ersetzen der der aktuellen Belastung des Fahrzeugs entsprechenden Längsbeschleunigungsänderung $S_T$ load,in Gleichung (13), um die der aktuellen Belastung entsprechende relative Rollradiusänderung $\Delta R_{load}$ des koaxialen Reifens zu berechnen;
Kompensieren der berechneten relativen Rollradiusänderung $\Delta R_{load}$ des Koaxialreifens in die relative Rollradiuscharakteristik Ri des Reifens, die sich aufgrund der Belastungsarbeitsbedingungen abnormal ändert.

8. Ein System zur indirekten Überwachung des Reifendrucks, das f ü r komplexe Antriebsbedingungen geeignet ist, bestehend aus:

Das Dekompositionsmodul ist dazu konfiguriert, das unabhängige Geschwindigkeitszeitstempelsignal jedes Reifens eines Fahrzeugs zu erhalten und die Echtzeit-Rollcharakteristik jedes Reifens auf der Grundlage des Geschwindigkeitszeitstempelsignals dieses Reifens zu berechnen; wobei die Echtzeit-Rollcharakteristik die Vibrationsspektrumcharakteristik Fi und die relative Rollradiuscharakteristik Ri umfasst.
ein Korrekturmodul, das so konfiguriert ist, dass es ein Echtzeit-Überwachungssignal des Fahrzeugs erhält, den aktuellen Betriebszustand des Fahrzeugs auf der Grundlage einer Zustandspositionsänderung eines bestimmten Signalwerts oder einer regelmäßigen Signaländerung des Überwachungssignals des Fahrzeugs identifiziert und die Echtzeit-Rollcharakteristik auf der Grundlage der aktuellen Betriebsbedingungen analysiert und deaktiviert oder kompensiert, um eine abnormale Änderung der Rollcharakteristik des Reifens zu korrigieren, die durch die aktuellen Betriebsbedingungen verursacht wird;

Grundlage der aktuellen Betriebsbedingungen zu analysieren und zu deaktivieren oder zu kompensieren, um eine abnormale Änderung der Rollcharakteristik des Reifens zu korrigieren, die aufgrund des aktuellen Betriebszustands verursacht wird;

ein Lösungsmodul, das so konfiguriert ist, dass es auf der Grundlage der Entsprechung zwischen der Rollcharakteristik und dem Reifendruck des Reifens den Reifendruck auf der Grundlage der korrigierten Rollcharakteristik des Reifens berechnet;

**dadurch gekennzeichnet, dass** das Korrekturmodul insbesondere umfasst:

Erhalten eines Echtzeit-Bremsflaggenpositionssignals aus dem Überwachungssignal des gesamten Fahrzeugs, Erhalten eines Zeitpunkts $t_0$, zu dem die Bremse betätigt wird, und eines Zeitpunkts $t_1$, zu dem die Bremse gelöst wird, entsprechend der Zustandspositionsänderung des Bremsflaggenpositionssignals; Erhalten von roll Winkelgeschwindigkeits änderungs -Werten $\Delta\omega_{FL}, \Delta\omega_{FR}, \Delta\omega_{RL}$, und $\Delta\omega_{RR}$, die jedem der Reifen aus dem Geschwindigkeitszeitstempelsignal jedes der Reifen entsprechen, Ermitteln eines Zeitpunkts $t_2$, zu dem die Rollwinkelgeschwindigkeit des Reifens Null ist, und Berechnen eines Bremsgrades B des Fahrzeugs anhand der folgenden Gleichung:

$$\Delta t = \begin{cases} t_2 - t_0, t_2 < t_1 \\ t_1 - t_0, t_1 < t_2 \end{cases} \tag{1},$$

$$\omega = 1/4(\Delta\omega_{FL} + \Delta\omega_{FR} + \Delta\omega_{RL} + \Delta\omega_{RR}) \tag{2},$$

$$B = \omega / \Delta t \tag{3},$$

wobei $\Delta t$ die tatsächliche Bremszeit und $\omega$ ein Änderungswert der Rollwinkelgeschwindigkeit des Reifens ist; Vergleichen des berechneten Bremsgrades B mit einem voreingestellten Bremsidentifikationsparameter $B_0$ des Fahrzeugs und Einstellen des Bremsidentifikationsparameters $B_0$ des Fahrzeugs auf den tatsächlichen Kalibrierungsergebnissen des Fahrzeugs:

wenn $B \leq B_0$, Feststellen, dass sich das Fahrzeug derzeit im normalen Bremsbetrieb befindet und keine Korrektur der Rollcharakteristik des Reifens erforderlich ist; wenn $B > B_0$, Feststellen, dass sich das Fahrzeug derzeit in einem Notbremszustand befindet, und Analysieren und Deaktivieren der relativen Rollradiuscharakteristik Ri des Reifens, um die Berechnung der relativen Rollradiuscharakteristik Ri zu stoppen. aktualisiert, bis festgestellt wird, dass die Notbremse gelöst ist.

9. Ein System zur indirekten Überwachung des Reifendrucks, das für komplexe Antriebsbedingungen geeignet ist, bestehend aus:

Zerlegungsmodul zum Erfassen unabhängiger Drehzahl-Zeitstempelsignale für jeden Reifen des Fahrzeugs und zum Berechnen der Echtzeit-Rollcharakteristika jedes Reifens auf der Grundlage der Drehzahl-Zeitstempelsignale, wobei die Echtzeit-Rollcharakteristika Schwingungsspektrumcharakteristika Fi und relative Rollradiuscharakteristika Ri umfassen; den aktuellen Betriebszustand des Fahrzeugs auf der Grundlage einer Zustandspositionsänderung eines bestimmten Signalwerts oder einer regelmäßigen Signaländerung des Überwachungssignals des Fahrzeugs zu identifizieren und die Echtzeit-Rollcharakteristik auf der Grundlage der aktuellen Betriebsbedingungen zu analysieren und zu deaktivieren oder zu kompensieren, um eine abnormale Änderung der Rollcharakteristik des Reifens zu korrigieren, die durch den aktuellen Betriebszustand verursacht wird;

einem Lösungsmodul, das so konfiguriert ist, dass es auf der Grundlage der Entsprechung zwischen der Rollcharakteristik und dem Reifendruck des Reifens den Reifendruck auf der Grundlage der korrigierten Rollcharakteristik des Reifens berechnet; **dadurch gekennzeichnet, dass** das Korrekturmodul insbesondere umfasst:

Ermitteln einer Echtzeit-Querbeschleunigung L und einer Gierrate Y auf der Grundlage des Überwachungssignals des gesamten Fahrzeugs und Berechnen eines diskreten Grades D(L) einer Querbeschleunigung und eines diskreten Grades D(Y) der Gierrate während k Abtastperioden:

$$D(L) = \sum_{i=1}^{k} 1/k(L_i - l)^2 \qquad (4)$$

$$D(Y) = \sum_{j=1}^{k} \frac{1}{k}(Y_j - y)^2 \qquad (5),$$

wobei Li die in einem i-ten Zyklus erfassten Querbeschleunigungsdaten sind, $i \in [1,k]$ , Yj ist ein im j-ten Zyklus erfasster Gierratendatensatz, $j \in [1,k]$, und k eine natürliche Zahl ist;
Berechnen eines gewichteten Echtzeit-Drehbetriebszustandswerts W(h) auf der Grundlage des Diskretisierungsgrads D(L) der Querbeschleunigung und des Diskretisierungsgrads D(Y) der Giergeschwindigkeit berechnet wird:

$$W(h) = \sqrt[m+n]{D(Y)^n D(L)^m} \qquad (6),$$

wobei m und n gewichtete Parameter sind, die entsprechend den Modellparametern und einer Echtzeit-Kurvenfahrcharakteristik des Fahrzeugs eingestellt werden;
Vergleich des gewichteten Werts W(h) der Drehbearbeitungsbedingung mit einem gewichteten Schwellenwert $W_0$ , um festzustellen, ob die Betriebsbedingung derzeit die Drehbetriebsbedingung ist:

wenn W(h)< $W_0$ , Feststellen, dass die Betriebsbedingung derzeit nicht die Drehbetriebsbedingung ist,
sodass keine Korrektur der Rollcharakteristik des Reifens erforderlich ist;
wenn W(h)>2$W_0$ , wird festgestellt, dass der Betriebszustand derzeit der Drehbetrieb ist, und Ladungszusammensetzungsbedingungen und Analysieren und Deaktivieren der relativen Rollradiuscharakteristik Ri des Reifens und der Schwingungsfrequenzspektrumcharakteristik Fi, um die Berechnung der Echtzeit-Rollcharakteristik des Reifens zu stoppen, bis der aktuelle Arbeitszustand als beendet bestimmt wird;
wenn $W_0 \leq$ W(h)$\leq$2$W_0$ , Feststellen, dass der Arbeitszustand derzeit der Drehzustand ist Arbeitsbedingung ist, und Berechnen der Echtzeit-Gierrateninformation Y(t) durch die folgende Gleichung (7):

$$Y(t) = \pm[(R_{FL} + R_{RL})/2 - (R_{FR} + R_{RR})/2]/A \qquad (7),$$

wobei A ein Reifenabstandsparameter des Fahrzeugs ist. $R_{FL}$, $R_{RL}$, $R_{FR}$ und $R_{RR}$ sind jeweils relative Rollradiuswerte der Reifen des Fahrzeugs;
Berechnen einer Geschwindigkeitsdifferenz $\Delta R$ zwischen den Reifen auf beiden Seiten des Fahrzeugs durch die folgende Gleichung (8):

$$\Delta R = \pm AY(t) \qquad (8),$$

wobei die positive oder negative Zahl von $\Delta R$ mit der Drehrichtung zusammenhängt;
die Geschwindigkeitsdifferenz $\Delta R$ zwischen den Reifen auf beiden Seiten des Fahrzeugs in die relative Rollradiuscharakteristik Ri des Reifens auf einer Seite des Fahrzeugs mit einem ungewöhnlich abnehmenden Rollradius kompensiert.

## Revendications

1. Procédé de surveillance indirecte de la pression des pneus applicable à des conditions de conduite complexes, comprenant :

S1, l'obtention d'un signal d'horodatage de vitesse indépendant de chaque pneu d'un véhicule, et calculer une caractéristique de roulement en temps réel de chaque pneu sur la base du signal d'horodatage de vitesse du pneu ; dans lequel la caractéristique de roulement en temps réel comprend une caractéristique de spectre de vibration Fi et une caractéristique de rayon de roulement relatif Ri ;

S2, obtenir un signal de surveillance en temps réel du véhicule, identifier un état de fonctionnement actuel du véhicule sur la base d'un changement de position d'état d'un valeur de signal ou d'un changement régulier du signal de surveillance de l'ensemble du véhicule, et analyse et désactive ou compense la caractéristique de roulement en temps réel sur la base de l'état de fonctionnement actuel afin de corriger un changement anormal de la caractéristique de roulement du pneu causé par l'état de fonctionnement actuel ,

S3, sur la base de la correspondance entre les caractéristiques de roulement et la pression du pneu du pneu, calculer la pression du pneu sur la base des caractéristiques de roulement corrigées du pneu ;

**caractérisé en ce que** l'étape S2 comprend spécifiquement : l'obtention d'un signal de position du drapeau de freinage en temps réel à partir du signal de surveillance de l'ensemble du véhicule, l'obtention, en fonction du changement d'état de la position du signal de position du drapeau de freinage, d'un moment où le freinage $t_0$ est généré et un instant $t_1$ lorsque le frein est relâché ; obtenir les valeurs de variation de vitesse angulaire de roulement $\Delta\omega_{FL}$, $\Delta\omega_{FR}$, $\Delta\omega_{RL}$, $\Delta\omega_{RR}$ correspondant à chacun des pneus à partir du signal d'horodatage de vitesse de chacun des pneus, obtenir un instant $t_2$ lorsque la vitesse angulaire de roulement du pneu est nulle, et calculer le degré de freinage B du véhicule à l'aide de l'équation suivante :

$$\Delta t = \begin{cases} t_2 - t_0, t_2 < t_1 \\ t_1 - t_0, t_1 < t_2 \end{cases} \qquad (1)$$

$$\omega = 1/4(\Delta\omega_{FL} + \Delta\omega_{FR} + \Delta\omega_{RL} + \Delta\omega_{RR}) \qquad (2)$$

$$B = \omega / \Delta t \qquad (3) ,$$

où $\Delta t$ est le temps de freinage réel, et $\omega$ est une valeur de variation de la vitesse angulaire de roulement du pneu ; comparer le degré de freinage calculé B avec un paramètre d'identification de freinage prédéfini $B_0$ du véhicule, et réglage du paramètre d'identification de freinage $B_0$ du véhicule sur la base des résultats d'étalonnage réels du véhicule :

si $B \le B_0$, déterminer que l'état de fonctionnement actuel du véhicule correspond à un freinage normal et ne nécessite aucune correction des caractéristiques de roulement du pneu ;

si $B > B_0$, déterminer que l'état de fonctionnement actuel du véhicule correspond à un freinage d'urgence, et analyser et désactiver la caractéristique de rayon de roulement relatif Ri du pneu afin d'empêcher la mise à jour du calcul des caractéristiques de rayon de roulement relatif Ri jusqu'à ce que le freinage d'urgence soit déterminé comme étant relâché.

2. Procédé de surveillance indirecte de la pression des pneus applicable à un état de fonctionnement complexe de la transmission

S1, obtenir un signal de marque temporelle de vitesse indépendant de chaque pneu d'un véhicule, et calculer une caractéristique de roulement en temps réel de chaque pneu sur la base du signal de marque temporelle de vitesse du pneu ; dans lequel la caractéristique de roulement en temps réel comprend une caractéristique de spectre de vibration spectrale de vibration Fi et une caractéristique de rayon de roulement relatif Ri ;

S2, obtenir un signal de surveillance en temps réel du véhicule, identifier un état de fonctionnement actuel du véhicule sur la base d'un changement de position d'état d'une valeur de signal particulière ou d'un changement régulier de signal du signal de surveillance de l'ensemble du véhicule, et analyser et désactiver ou compenser la caractéristique de roulement en temps réel sur la base de l'état de fonctionnement actuel afin de corriger un changement anormal dans une caractéristique de roulement du pneu causé par l'état de fonctionnement actuel ;

S3, sur la base de la correspondance entre la caractéristique de roulement et la pression du pneu, calculer la pression du pneu sur la base de la caractéristique de roulement corrigée du pneu ;

**caractérisé en ce que** l'étape S2 comprend spécifiquement : l'obtention d'une accélération latérale L en temps réel et un taux de lacet Y en temps réel sur la base du signal de surveillance de l'ensemble du véhicule, et calculer un degré discret D(L) d'une accélération latérale et un degré discret D(Y) du taux de lacet pendant k périodes d'échantillonnage, respectivement :

$$D(L) = \sum_{i=1}^{k} 1/k(L_i - l)^2 \qquad (4)$$

$$D(Y) = \sum_{j=1}^{k} \frac{1}{k}(Y_j - y)^2 \qquad (5),$$

où Li est une donnée d'accélération latérale collectée au cours d'un i-ième cycle, $i \in [1,k]$ ; Yj est une donnée de vitesse de lacet collectée au cours du j-ième cycle, $j \in [1,k]$" et k est un nombre naturel ;

calculer une valeur pondérée W(h) des conditions de travail en virage en temps réel sur la base du degré discret D(L) de l'accélération latérale et du degré discret D(Y) du taux de lacet :

$$W(h) = \sqrt[m+n]{D(Y)^n D(L)^m} \qquad (6),$$

où m et n sont des paramètres pondérés, qui sont définis en fonction des paramètres du modèle et des caractéristiques de virage en temps réel du véhicule ;

comparer la valeur pondérée W(h) de la condition de travail de virage avec un seuil pondéré $W_0$ , déterminer si la condition de travail est actuellement une condition de travail de virage :

si W (h) < $W_0$, déterminer que la condition de fonctionnement n'est pas actuellement la condition de fonctionnement en virage et ne nécessite aucune correction de la caractéristique de roulement du pneu ;

si W(h) > $2W_0$, déterminer que la condition de fonctionnement est actuellement une condition composite de virage et de charge, et analyser et désactiver la caractéristique de rayon de roulement relatif Ri du pneu et la caractéristique de spectre de fréquence de vibration Fi pour arrêter le calcul de la caractéristique de roulement en temps réel du pneu à partir de sa mise à jour jusqu'à ce que la condition de fonctionnement actuelle soit considérée comme terminée ;

si Wo $\leq$ W (h) $\leq$ $2W_0$, déterminer que la condition de fonctionnement est actuellement la condition de fonctionnement en virage, et calculer les informations de vitesse de lacet en temps réel Y(t) à l'aide de l'équation (7) suivante :

$$Y(t) = \pm[(R_{FL} + R_{RL})/2 - (R_{FR} + R_{RR})/2]/A \qquad (7),$$

où A est un paramètre d'espacement des pneus du véhicule, $R_{FL}$, $R_{RL}$ , $R_{FR}$, et $R_{RR}$ sont respectivement les valeurs relatives du rayon de roulement des pneus du véhicule ;

calculer la différence de vitesse $\Delta R$ entre les pneus des deux côtés du véhicule à l'aide de l'équation suivante (8) :

$$\Delta R = \pm AY(t) \qquad (8),$$

où le nombre positif ou négatif de $\Delta R$ est lié au sens de rotation ;

la différence de vitesse $\Delta R$ entre les pneus des deux côtés du véhicule est compensée dans la caractéristique de rayon de roulement relatif Ri du pneu du côté du véhicule présentant un rayon de roulement anormalement réduit.

3. Procédé de surveillance indirecte de la pression des pneus applicable aux conditions de conduite complexes selon la revendication 1 ou 2, **caractérisé en ce que** l'étape S2 comprend :

la sélection de deux fréquences ayant le plus grand impact sur l'excitation de la surface de la route, l'extraction des valeurs propres de fréquence spectre de fréquences correspondant aux deux fréquences à partir de la caractéristique du spectre de fréquences de vibration Fi de chaque pneu du véhicule, respectivement, et l'obtention d'une première valeur propre du spectre de fréquences et d'une deuxième valeur propre du spectre de fréquences ;

en fonction des variations de l'amplitude de la première valeur propre du spectre de fréquences et de l'amplitude de la deuxième valeur propre du spectre de fréquences au fil du temps, en combinaison avec une variation de la caractéristique relative du rayon de roulement Ri du pneu au fil du temps, afin de déterminer si chaque pneu se trouve actuellement dans un état de sous-pression non proportionnelle ou dans un état de sous-pression proportionnelle :

s'il est déterminé que le pneu se trouve dans un état de sous-pression non proportionnelle ou dans un état de sous-pression proportionnellement identique, arrêter l'identification de la surface rugueuse de la route ;

s'il est déterminé que le pneu n'est pas dans un état de sous-pression non proportionnellement identique ou dans un état de sous-pression proportionnellement identique, calculer la moyenne entre la première valeur propre du spectre de fréquences et la deuxième valeur propre du spectre de fréquences pour obtenir une première valeur de compensation des caractéristiques de vibration de fréquence Power1 et une deuxième valeur de compensation des caractéristiques de vibration de fréquence Power2 qui reflètent la rugosité d'une surface routière, et compenser la première valeur de compensation des caractéristiques de vibration de fréquence Power1 et la deuxième valeur de compensation des caractéristiques de vibration de fréquence Power2 dans les caractéristiques du spectre de fréquence de vibration Fi de chacun des pneus du véhicule.

4. Procédé de surveillance indirecte de la pression des pneus applicable aux conditions de travail complexes de transmission, selon la revendication 3, **caractérisé en ce que**, selon les variations au fil du temps de l'amplitude de la valeur propre du premier spectre de fréquences et de l'amplitude de la valeur propre du second spectre de fréquences, combinées aux variations de la caractéristique de rayon de roulement relatif Ri du pneu au fil du temps, la détermination du fait que chaque pneu se trouve actuellement dans un état de sous-pression proportionnel non identique ou dans un état de sous-pression proportionnel identique comprend :

si l'amplitude de la première valeur propre du spectre de fréquences, l'amplitude de la deuxième valeur propre du spectre de fréquences et la caractéristique relative du rayon de roulement Ri du pneu changent de manière synchrone au fil du temps, déterminer que les quatre pneus se trouvent actuellement dans l'état de sous-pression non proportionnellement identique ;

si la caractéristique relative du rayon de roulement Ri du pneu change moins au cours d'une certaine période de temps, et si l'amplitude de la première valeur propre du spectre de fréquences et l'amplitude de la deuxième valeur propre du spectre de fréquences changent selon un schéma cohérent au fil du temps, déterminer que les quatre pneus sont dans un état de sous-pression proportionnellement identique.

5. Procédé de surveillance indirecte de la pression des pneus applicable à des conditions de fonctionnement complexes selon les revendications 1, 2 ou 4, **caractérisé en ce que** l'étape S2 comprend :

obtention d'un signal d'accélération longitudinale Xt basé sur le domaine temporel selon le signal de surveillance de l'ensemble du véhicule, et obtenir une valeur de confiance filtrée d'accélération longitudinale lisse et plausible St après filtrage à l'aide de l'équation (9) :

$$S_t = \alpha X_t + (1 - \alpha)S_{t-1} \qquad (9),$$

où $\alpha$ est un paramètre filtré, et $S_{t-1}$ est une valeur de confiance filtrée d'accélération longitudinale à un moment précédent ;

La vitesse de la roue entraînée du véhicule est obtenue à partir du signal d'horodatage de la vitesse du pneu, et l'accélération réelle $A_{rea}$ du véhicule est obtenue en fonction du taux de variation de la vitesse de la roue entraînée du véhicule par unité de temps.

À partir du taux de variation de la vitesse de la roue entraînée du véhicule par unité de temps, on obtient l'accélération réelle Area du véhicule.

calculer une valeur moyenne Vi des vitesses des deux pneus entraînés et une valeur moyenne $V_0$ des vitesses des deux pneus moteurs sur la base des signaux d'horodatage de vitesse des quatre pneus, et calculer un taux de glissement moteur H sur la base de la valeur moyenne Vi des vitesses des deux pneus entraînés et de la valeur moyenne $V_0$ des vitesses des deux pneus moteurs :

$$H = \frac{V_i - V_0}{V_i} \times 100\% \qquad (10),$$

déterminer si le véhicule se trouve actuellement en montée ou en descente sur sur la base de la valeur de confiance filtrée de l'accélération longitudinale St, de l'accélération réelle $A_{rea}$ du véhicule et du taux de glissement de conduite H :

si $S_t$ > H/$H_0$ $A_{rea}$, déterminer que le véhicule est en condition de fonctionnement en montée ou en descente ; où $H_0$ est un seuil de taux de glissement ;

si H <$H_0$ lorsque le véhicule est en condition de fonctionnement en montée ou en descente, exiger aucune correction des caractéristiques de roulement du pneu.

6. Procédé de surveillance indirecte de la pression des pneus applicable à des conditions de conduite complexes selon la revendication 5, **caractérisé en ce que** l'étape S2 comprend :

l'obtention d'un signal de fluctuation de couple T(h) basé sur le domaine temporel à partir du signal de surveillance de l'ensemble du véhicule, et le calcul d'un degré de conduite dynamique $T_{va}$ of du véhicule en combinant une valeur de couple T à une vitesse uniforme :

$$T_{va} = T(h)/T \qquad (11),$$

déterminer si le véhicule est dans un état de fonctionnement dynamique selon le degré de conduite dynamique $T_{va}$ et un taux de glissement de conduite H :

si $H \geq H_0$ und $T_{va} > T_c$, déterminer que le véhicule est dans un état de fonctionnement dynamique, où $T_c$ est un seuil de conduite dynamique, et la valeur de $T_c$ est définie empiriquement ;
pour l'état de fonctionnement dynamique, calculer un gain à l'aide de l'équation suivante équation (12) pour un rayon de roulement relatif du pneu moteur :

$$R = R_{driving} * f(H) \qquad (12),$$

où f (H) est une fonction de gain liée à un taux de glissement d'entraînement actuel ; $R_{driving}$ est le rayon de roulement relatif du pneu moteur ; R est le rayon de roulement relatif du pneu moteur après le calcul du gain ; mettre à jour le rayon de roulement relatif R du pneu moteur gagné à la caractéristique de rayon de roulement relatif Ri.

7. Procédé de surveillance indirecte de la pression des pneus applicable à des conditions de conduite complexes selon la revendication 6, **caractérisé en ce que** l'étape S2 comprend en outre :

déterminer si le véhicule est actuellement en condition de fonctionnement de chargement, s'il est déterminé que le véhicule n'est pas actuellement en condition de fonctionnement de freinage, en condition de fonctionnement en montée ou en descente, ou en condition de fonctionnement de conduite dynamique, et s'il est déterminé qu'un changement de chargement est actuellement fourni en fonction d'une valeur de confiance filtrée d'accélération longitudinale St ;
obtenir une variation d'accélération longitudinale $S_{T_{load}}$ correspondant à différentes charges M du véhicule enregistrées pendant une phase d'étalonnage réelle du véhicule, une variation d'accélération longitudinale $S_{T_{unloaded}}$ lorsqu'aucune charge n'est fournie, et une variation relative du rayon de roulement $\Delta R_{load}$ d'un pneu coaxial, et fournir l'équation relationnelle suivante lorsque la charge M se situe dans la plage de charge de l'ensemble du véhicule :

$$\Delta R_{load} = p(S_{T_{load}} - S_{T_{unloaded}}) \qquad (13),$$

où p est un facteur proportionnel ;
en substituant la variation d'accélération longitudinale $S_{T_{load}}$ correspondant à la charge actuelle du véhicule dans l'équation (13) pour calculer la variation relative du rayon de roulement $\Delta R_{load}$ du pneu coaxial correspondant à la charge actuelle ;
compenser la variation relative du rayon de roulement $\Delta R_{load}$ calculée du pneu coaxial dans la caractéristique relative du rayon de roulement Ri du pneu qui varie anormalement en raison des conditions de fonctionnement sous charge.

8. Système de surveillance indirecte de la pression des pneus applicable à des conditions de conduite complexes, comprenant :

un module de décomposition, configuré pour obtenir un signal de temporisation de vitesse indépendant de chaque pneu d'un véhicule, et calculer une caractéristique de roulement en temps réel de chaque pneu sur la base du signal de temporisation de vitesse du pneu ; dans lequel la caractéristique de roulement en temps réel comprend une caractéristique de spectre de vibration Fi et une caractéristique de rayon de roulement relatif Ri ;

un module de correction, configuré pour obtenir un signal de surveillance en temps réel du véhicule, identifier l'état de fonctionnement actuel du véhicule sur la base d'un changement de position d'état d'une valeur de signal particulière ou d'un changement régulier de signal du signal de surveillance du véhicule, et analyser et désactiver ou compenser la caractéristique de roulement en temps réel sur la sur la base des conditions de fonctionnement actuelles afin de corriger un changement anormal dans les caractéristiques de roulement du pneu causé par les conditions de fonctionnement actuelles ;

un module de résolution, configuré pour, sur la base de la correspondance entre la caractéristique de roulement et la pression du pneu, calculer la pression du pneu sur la base de la caractéristique de roulement corrigée du pneu ;

**caractérisé en ce que** le module de correction comprend spécifiquement :

obtenir un signal de position du drapeau de freinage en temps réel à partir du signal de surveillance de l'ensemble du véhicule, obtenir, en fonction du changement d'état de la position du signal du drapeau de freinage, un moment $t_0$ où le freinage est généré et un moment $t_1$ où le freinage est relâché ; obtenir rolling angular-speed change values $\Delta\omega_{FL}, \Delta\omega_{FR}, \Delta\omega_{RL},$ et $\Delta\omega_{RR}$ correspondant à chacun des pneus à partir du signal d'horodatage de vitesse de chacun des pneus, en obtenant un instant $t_2$ où la vitesse angulaire de roulement du pneu est nulle, et en calculant un degré de freinage B du véhicule à l'aide de l'équation suivante :

$$\Delta t = \begin{cases} t_2 - t_0, t_2 < t_1 \\ t_1 - t_0, t_1 < t_2 \end{cases} \qquad (1)$$

$$\omega = 1/4(\Delta\omega_{FL} + \Delta\omega_{FR} + \Delta\omega_{RL} + \Delta\omega_{RR}) \qquad (2)$$

$$B = \omega / \Delta t \qquad (3) \, ,$$

où $\Delta t$ est le temps de freinage réel, et $\omega$ est une valeur de variation de la vitesse angulaire de roulement du pneu ;

comparer le degré de freinage calculé B avec un paramètre d'identification de freinage prédéfini $B_0$ du véhicule, et régler le paramètre d'identification de freinage $B_0$ du véhicule sur le sur la base des résultats réels de l'étalonnage du véhicule :

si $B \leq B_0$, déterminer que l'état de fonctionnement actuel du véhicule correspond à un freinage normal et ne nécessite aucune correction de la caractéristique de roulement du pneu ;

si $B > B_0$, déterminer que l'état de fonctionnement actuel du véhicule correspond à un freinage d'urgence, et analyser et désactiver la caractéristique de rayon de roulement relatif Ri du pneu afin d'arrêter le calcul des caractéristiques de rayon de roulement relatif Ri à partir de mis à jour jusqu'à ce que le frein d'urgence soit considéré comme desserré.

9. Système de surveillance indirecte de la pression des pneus applicable à des conditions de conduite complexes, comprenant :

un module de décomposition, configuré pour obtenir un signal de temps de tampon de vitesse indépendant de chaque pneu d'un véhicule, et calculer une caractéristique de roulement en temps réel de chaque pneu sur la base du signal d'horodatage de vitesse du pneu ; dans lequel la caractéristique de roulement en temps réel comprend une caractéristique de spectre de vibration Fi et une caractéristique de rayon de roulement relatif Ri;

un module de correction, configuré pour obtenir un signal de surveillance en temps réel du véhicule, identifier l'état de fonctionnement actuel du véhicule sur la base d'un changement d'état d'une valeur de signal particulière ou d'un changement régulier du signal de surveillance du véhicule, et analyser et désactiver ou compenser la caractéristique de roulement en temps réel sur la base des conditions de fonctionnement actuelles afin de corriger un changement anormal de la caractéristique de roulement du pneu causé par les conditions de fonctionnement actuelles ;

un module de résolution, configuré pour, sur la base de la correspondance entre la caractéristique de roulement et la pression du pneu, calculer la pression du pneu sur la base de la caractéristique de roulement corrigée du pneu ;

**caractérisé en ce que** le module de correction comprend spécifiquement :

l'obtention d'une accélération latérale L en temps réel et d'un taux de lacet Y sur la base du signal de surveillance de l'ensemble du véhicule, et calculer un degré discret D(L) d'une accélération latérale et un degré discret D(Y) du taux de lacet pendant k périodes d'échantillonnage, respectivement :

$$D(L) = \sum_{i=1}^{k} 1/k(L_i - l)^2 \quad (4)$$

$$D(Y) = \sum_{j=1}^{k} \frac{1}{k}(Y_j - y)^2 \quad (5),$$

où Li est une donnée d'accélération latérale collectée au cours d'un i-ième cycle, i∈[1,k] ; Yj est une donnée de vitesse de lacet collectée au cours du j-ème cycle, j∈[1,k],, et k est un nombre naturel ;
calculer une valeur pondérée W(h) des conditions de travail en virage en temps réel sur la base du degré discret D(L) de l'accélération latérale et du degré discret D(Y) du vitesse de lacet :

$$W(h) = \sqrt[m+n]{D(Y)^n D(L)^m} \quad (6),$$

où m et n sont des paramètres pondérés, qui sont définis en fonction des paramètres du modèle et des caractéristiques de virage en temps réel du véhicule ;
comparer la valeur pondérée W(h) de la condition de travail de tournage avec un seuil pondéré $W_0$, déterminer si la condition de fonctionnement est actuellement la condition de fonctionnement en virage :

si W(h)< $W_0$ déterminer que la condition de fonctionnement n'est pas actuellement la condition de fonctionnement en virage, ne nécessitant aucune correction de la caractéristique de roulement du pneu ;
si W(h)>2$W_0$, déterminer que la condition de fonctionnement est actuellement une condition de virage et conditions de charge composites, et analyser et désactiver la caractéristique relative au rayon de roulement Ri du pneu et la caractéristique du spectre de fréquence de vibration Fi afin d'arrêter le calcul de la caractéristique de roulement en temps réel du pneu jusqu'à ce que la condition de fonctionnement actuelle soit considérée comme terminée ;
si $W_0$ ≤ W(h)≤2$W_0$, déterminer que la condition de fonctionnement est actuellement la condition de virage , et calculer les informations de vitesse de lacet en temps réel Y(t) à l'aide de l'équation (7) suivante :

$$Y(t) = \pm[(R_{FL} + R_{RL})/2 - (R_{FR} + R_{RR})/2]/A \quad (7),$$

où A est un paramètre d'espacement des pneus du véhicule.$R_{FL}$, $R_{RL}$,$R_{FR}$et $R_{RR}$ sont respectivement les valeurs relatives du rayon de roulement des pneus du véhicule ;
calculer une différence de vitesse $\Delta R$ entre les pneus des deux côtés du véhicule à l'aide de l'équation (8) suivante :

$$\Delta R = \pm AY(t) \quad (8),$$

où le nombre positif ou négatif de $\Delta R$ est lié à un sens de rotation ;
la différence de vitesse $\Delta R$ entre les pneus des deux côtés du véhicule est compensée dans la caractéristique de rayon de roulement relatif Ri du pneu du côté du véhicule présentant un rayon de roulement anormalement réduit.

Signal input

```
┌─────────────────────────┐
│ CAN    signal    of     │
│ speed  time   stamp     │
│ signal  of  tire  of    │
│ entire vehicle          │
└─────────────────────────┘
```

```
┌─────────────────────────┐        ┌─────────────────────────┐
│ Original      rolling   │        │ Monitoring of drive     │
│ characteristics         │        │ working   condition     │
│ calculation of tire     │        │ of vehicle              │
└─────────────────────────┘        └─────────────────────────┘
```

◇ Condition identificatio

```
┌────────┐  ┌──────────────┐  ┌──────────┐  ┌──────────────┐  ┌──────────┐
│ Brake  │  │ Mountain     │  │ Dynamic  │  │ Rough  road  │  │ Loading  │
│        │  │ road working │  │ drive    │  │ surface      │  │ change   │
│        │  │ condition    │  │          │  │              │  │          │
└────────┘  └──────────────┘  └──────────┘  └──────────────┘  └──────────┘
```

```
┌─────────────────────────┐
│ Tire pressure           │
│ condition under ideal   │
│ working condition       │
└─────────────────────────┘
```

┌─────────┐        ◇ Determine
│ Disable │
└─────────┘

┌─────────┐        ◇ Compensatio
│ Correct │          n algorithm
└─────────┘

```
┌─────────────────────────┐
│ Actual          tire    │
│ pressure condition      │
└─────────────────────────┘
```

FIG.1

34

FIG. 2

FIG. 3

400

Computer readable storage medium

411

Computer program

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017015154 A1
- US 6385553 B
- US 5982279 A
- WO ZL202111004413 A
- WO ZL201910226001 A